# EUROPEAN PATENT SPECIFICATION

(11) **EP 4 713 519 B1**
(45) Date of publication and mention of the grant of the patent: **19.08.2026**
(21) Application number: 24745853.2
(22) Date of filing: 28.06.2024
(51) Int. Cl.: D04H 1/724, D04H 1/54, B32B 5/02, B32B 5/26, B32B 27/12

(54) **BREATHABLE TEAR RESISTANT FLASH-SPUN SHEET**
ATMUNGSAKTIVE REISSFESTE FLASH-GESPONNENE FOLIE
FEUILLE RESPIRANTE, RESISTANTE A LA DECHIRURE, FILEE PAR ECLAIR

(30) Priority: 30.06.2023 EP 23182712
(43) Date of publication of application: 25.03.2026
(73) Proprietor: DuPont Safety & Construction, Inc., Wilmington, DE 19805 (US)
(72) Inventor: VAN MEERVELD, Jan, 5326 Contern Luxembourg (LU)
(74) Representative: Abitz & Partner
(86) International application number: PCT/US2024/036058
(87) International publication number: WO 2025/006914

(56) References cited:
- WO-A1-2015/195898
- WO-A1-2015/196217
- WO-A1-2016/200873
- US-A- 3 860 369
- US-A- 5 972 147
- US-A- 6 034 008

## Description

### FIELD OF THE INVENTION

The present invention relates to (i) a bonded sheet of nonwoven flash-spun plexifilamentary fibrils exhibiting high tear resistance, a high degree of breathability and high tensile strength, (ii) a process for the preparation of a bonded sheet of nonwoven flash-spun plexifilamentary fibrils, and (iii) a multilayer sheet structure and an article comprising at least one bonded sheet of nonwoven flash-spun plexifilamentary fibrils.

### BACKGROUND

Flash-spun nonwoven sheets have been developed with wide-ranging properties suitable for use in a variety of applications, including, but not limited to, protective apparel. Their production usually involves two stages, a first stage in which fibrils are produced and laid down in an overlapping manner to produce a fibril assembly in the form of a sheet, and a second stage in which adjacent fibrils are bonded via thermal bonding to obtain a robust structure which cannot be easily disassembled. The properties of the final nonwoven sheet are impacted by various factors from the first and second stages.

Flash-spinning is a method for producing fibrils having a unique plexifilamentary structure. It involves preparing a solution of a fibril-forming polymer in a spin agent at a pressure above the vapor pressure of the spin agent and at a temperature above the normal boiling point of the spin agent, and releasing that solution into a zone of substantially lower temperature and pressure such that the spin agent flash evaporates and the polymer solidifies in the form of plexifilamentary fibrils. Examples of flash-spinning processes are disclosed in US 3,081,519 and US 3,227,794.

The properties of flash-spun fibrils depend on, among other factors, the polymer or blend of polymers used to form them, the spin agent used to produce the spin fluid, the concentration of polymer in the spin fluid, and the temperature of the spin fluid during spinning. US 7,744,989 describes a flash-spinning process using a hydrocarbon spin agent wherein the spin temperature is increased to produce flash-spun fibrils with reduced internal void volume. Thermal bonded nonwoven sheets made from these fibrils are more breathable, but a trade-off has to be made regarding trapezoidal tear resistance which is reduced in these sheets after thermal bonding.

As with other types of spinning technology, the properties of an initial fibril assembly are modified by subsequent thermal bonding to produce a flash-spun nonwoven sheet.

Thermal bonding is a common process for bonding nonwoven sheets in which heat is used to soften the polymer from which the fibrils are made, typically, by passing the nonwoven sheet through an arrangement of heated rolls, with a back-up roll which forms a nip or without a back-up roll. The degree of bonding can vary based on the temperature and pressure, and time during which these are applied. Bonding of the nonwoven sheet also varies spatially depending on the rolls used and area to which the bonding is applied, e.g., using smooth surfaced rolls to apply uniform heat and pressure over the entire surface versus using patterned rolls to apply heat and pressure locally over only a portion of the surface to form an embossed pattern in the final nonwoven sheet.

US 3,442,740 and US 3,532,589 describe thermal bonding on a smooth heated roll where one or both sides of the nonwoven sheet are subjected to generally uniform, full surface contact thermal bonding. In this process, a surface bonded nonwoven sheet product is obtained having a paper-like feel which is suitable for uses such as packaging and print media but too stiff for use in garments, being uncomfortable and "noisy" for the wearer. Thermal bonding using a thermal calendar bonder, such as that described in US 5,972,147, also tends to produce a stiffer product without the softness desired for most garment applications, such as protective apparel. Products having a paper-like feel also have disadvantages in other applications such as car covers which need to conform to the shape of the vehicle, or roof-linings which can vibrate and create noise when wind blows over them.

US 3,478,141 and US 4,091,137 describe thermal bonding carried out by passing nonwoven sheets between heated engraved embossing rolls and rubber-coated back-up rolls to bond one or both sides of the nonwoven sheet only in defined areas, producing softer and more drapable materials suitable for use in garment applications. The embossing roll can contain different patterns, such as a point pattern as described in US 3,478,141, US 6,610,390, and US 2004/241399 A1, a rib pattern as described in US 2003/0032355 A1 and US 2003/00165667 A1, a linen pattern or a random pattern as described in US 7,744,989, or a combination of different patterns as described in US 5,620,779 and US 5,964,742. The nonwoven sheet may pass through one or multiple pairs of a heated embossing roll and a rubber-coated back-up roll and may also wrap partially around one or more heated embossing rolls to transfer heat into the nonwoven sheet prior to reaching the nip between any such embossing roll and a rubber-coated back-up roll. In addition, the nonwoven sheet may be in contact with one or more pre-heat or cooling rolls before and after passing through each pair of embossing and back-up rolls, in a configuration as described in US 5,972,147. US 6,034,008 and US 2003/00165667 A1 describe a process in which one side is embossed with a "rib" pattern of discrete bond points and the other side is embossed over a substantial portion of the surface with a "linen" pattern.

Thermal bonding impacts different properties of the nonwoven sheet in different ways.

The flux properties of nonwoven sheets, i.e., the ability of the fibril assembly to allow free movement of air or other gases such as water vapor through it, either by diffusion or by bulk flow under a pressure difference, may be altered in different ways depending on the bonding process. Heating can lead to relaxation of tension within the fibrils and fibril shrinkage, resulting in an increase in the space between the fibrils and an increase in flux. Conversely, pressure applied during bonding can compress the structure, reducing the space between the fibrils through which gases can move, resulting in a decrease in flux. Moreover, if temperatures and pressures are high enough to cause fibrils to melt and fuse together extensively, this can create film-like regions which allow very little flux.

The barrier properties of nonwoven sheets, i.e., the ability of the fibril assembly to prevent particles in the air from passing through it, or liquids such as water to penetrate it under pressure, tend to change in the converse manner after bonding as, for instance, reduced pore sizes created by compression during bonding result in greater resistance to the passage of particles or liquids through the structure.

Mechanical properties such as delamination resistance, puncture and tear resistance, abrasion resistance, and tensile strength may increase or decrease as the degree of bonding increases. However, the stronger connections between fibrils resulting from bonding, and the limitation of their ability to move relative to each other, increases the stiffness of the bonded sheet. Moreover, the trapezoidal tear resistance may be unsatisfactory.

These complex interactions of behaviors mean that thermally bonding a nonwoven sheet to produce a product for a particular application typically requires a compromise in the desired properties of the final nonwoven sheet.

The effect of bonding on sheet stiffness is especially notable when bonding is applied uniformly over the whole surface. This results in sheets having a paper-like texture often referred to as "hard-structures" which tend to produce a lot of noise when flexed or bent. When embossed rolls are used to create areas having greater and lesser degrees of bonding, quieter and more flexible, softer, fabric-like structures can be achieved, often referred to as "soft-structures." However, even soft-structure bonded sheets are stiffer and less flexible than the starting sheet before bonding.

It is possible to recover some softness in a bonded, nonwoven sheet, by applying processes known in the textile industry such as softening or re-lofting. In these processes, the nonwoven sheet is passed through equipment which locally distorts the material in a way that breaks or partially breaks some of the bonding between fibrils, allowing more relative motion and increasing the flexibility of the nonwoven sheet. These changes in mechanical properties are typically accompanied by an increase in flux properties and a loss in barrier properties.

US 3,408,709 describes a softening process using a button breaker to mechanically soften a nonwoven sheet. The button breaker employs knobbed rolls which turn at a different speed to, or even in the opposite direction to the movement of the nonwoven sheet as it travels over them, creating a rubbing effect.

US 5,966,785 and US 6,195,854 report a mechanical softening process where the nonwoven sheet is passed through the nip of a knobbed roll against a soft rubber backup roll. However, no information is given in these documents on how this process impacts the barrier properties of the nonwoven sheet.

US 7,296,328 discloses a process for the softening of a nonwoven sheet in which with increasing softening cycles, the sheet shows an increase in breathability. The described softening process employs a rubbing effect using a speed difference between the nonwoven sheet and the roller or mechanical object over which it passes. However, since the nonwoven sheet is exposed to a rubbing surface, its surface is damaged.

US 3,920,874 and US 3,811,979 describe a process employing pairs of rolls covered with square edged cylindrical pins which interlock for the softening of a nonwoven sheet passed between them, with the softening rollers moving at the same surface speed as the nonwoven sheet. The nonwoven sheet is required to have an elongation of at least 10 % for the process to work correctly.

WO 2015/195898 A1 relates to flash-spun plexifilamentary sheets or fabrics suited for home wrap or protective apparel applications.

An ideal nonwoven sheet for use in protective apparel should have good barrier properties to ensure the protection of the wearer against external contaminants, have high flux to allow rapid exhaust of warm air and water vapor from within the protective apparel, and maintain a comfortable environment for the wearer, while having adequate mechanical properties to withstand the rigors of physical work, including tensile strength and tear resistance. It is also preferable that the nonwoven sheet has low stiffness and a soft texture so that it does not provide noticeable resistance to the wearer's movements or generate excessive noise. While flash-spun sheets have demonstrated a good variety of desired properties, there has been a trade-off required between the desired comfort, breathability, and mechanical strength. Therefore, there is a need for flash-spun sheets for use in protective apparel that provide improved mechanical strength without sacrificing breathability and comfort for the wearer.

### SUMMARY OF THE INVENTION

In one embodiment, the invention is directed to a thermally bonded sheet of nonwoven flash-spun plexifilamentary fibrils, the sheet having
(a) a basis weight from 32 g/m² to 60 g/m²,
(b) an average trapezoidal tear resistance above 20 N,
(c) an average tensile strength from 40 N to 90 N,
(d) a BET surface area from 4 m²/g to 8 m²/g,
(e) a Gurley Hill porosity of 2 seconds to 30 seconds, and
(f) a hydrostatic head above 105 cmH₂O.

In a further embodiment, the invention is directed to a process for the preparation of a sheet of nonwoven flash-spun plexifilamentary fibrils which comprises the steps of:
(i) generating a spin fluid comprising
   (a) from 8 to 12 weight percent of a polymer, based on the total amount of the spin fluid, and
   (b) a spin agent comprising a chlorine-containing solvent, selected from dichloromethane, cis-1,2-dichloroethylene and trans-1,2-dichloroethylene, in combination with a fluorine-containing solvent,
(ii) flash-spinning the spin fluid at a temperature at or above 200°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and
(iv) thermally bonding by embossing the consolidated sheet to obtain a bonded sheet.

### DETAILED DESCRIPTION

### Definitions of Terms and Test methods

Before addressing details of embodiments, some terms and test methods are defined or clarified. When average values are indicated herein, this refers to the arithmetic average.

BET surface area is measured by the BET nitrogen absorption method of S. Brunauer, P. H. Emmett and E. Teller, J. Am. Chem. Soc., V. 60 p 309-319 (1938) based on 5 equidistant relative pressures between 0.1 to 0.25 and is reported as m²/g. The samples measured have a total surface area above 2 m². BET surface area is measured using a Quantachrome model NOVA 3000e from Quantachrome GmbH, Odelzhausen, Germany. Performance of the equipment is verified by using a standard aluminum oxide sample (3P-SRF586) having a BET surface area of 5.86 +/- 0.23 m²/gram supplied by 3P Instruments GmbH & Co, Odelzhausen, Germany. Before measurement, the samples are dried for at least 2 hours at a temperature of 60°C under vacuum on equipment Degasser MasterPrep from Quantachrome GmbH, Odelzhausen, Germany. The BET surface area reported herein is based on 1 or 2 measurements.

The remaining tests described in the following were carried out without preconditioning of the samples.

Basis weight is determined according to EN ISO 536 (1996) & EN 1849-2 (2009) using a sample size of 100 cm² and is reported in gram per square meter (g/m²). The reported value represents an average of at least 12 individual measurements.

The trapezoidal tear strength (also referred to as trapezoid tearing strength) is a measure of the tear resistance of a fabric. The trapezoidal tear strength is measured according to EN ISO 9073-4 (1997) and is expressed in newton (N). The average trapezoidal tear strength is reported as the average of the trapezoidal tear strength in the machine direction (MD) of the sheet and of the trapezoidal tear strength in the cross direction (XD) of the sheet. The reported trapezoidal tear in either direction is an average of at least 12 measurements. The trapezoidal tear strength of a sample tends to increase proportionally with basis weight. Thus, the trapezoidal tear strength can be normalized by dividing it by the actual basis weight.

In addition, applicants have discovered that the relationship between the trapezoidal tear strength of a sample and its total BET surface area is dependent on the flash-spinning process used to produce the fibrils from which it is made. It is, therefore, appropriate to consider the ratio of the average trapezoidal tear to the total surface area of the nonwoven sheet. The average trapezoidal tear strength normalized to the product of surface area and basis weight (TTNSA) is defined as: $TTNSA = \frac{average trapezoidal tear}{basis weight \left[g/{m}^{2}\right] \times BET surface area \left[{m}^{2}/g\right]}$

Tensile strength is a measure of the breaking strength of a fabric when subjected to unidirectional stress. Tensile strength is determined by EN ISO 13934-1 (1999) "Textiles - Tensile properties of fabrics - Part 1: Determination of maximum force and elongation at maximum force using the strip method", using a 200 mm gauge length between the jaws of the tensilometer and a test speed of 100 mm/min. Results are reported in newtons (per 50 mm sample width). Separate measurements are carried out with tension applied in the machine direction (MD) and in the cross direction (XD) for the material being tested, and the average of the MD and XD values is reported herein. The tensile strength reported herein is an average of at least 12 measurements in the machine direction (MD), and an average of at least 6 measurements in the cross direction (XD).

The hardness of the rubber is determined based on DIN ISO 7619-1 (2010) - Rubber, vulcanized or thermoplastic - Determination of indentation hardness - Part 1: Durometer method (Shore hardness). The hardness is reported in Shore A.

Gurley Hill porosity (sometimes also referred to as "Gurley Porosity") is a measure of the permeability of the sheet for gaseous materials. In particular, it is a measure of how long it takes a volume of gas to pass through an area of the sheet wherein a certain pressure gradient exists. Gurley-Hill porosity is determined in accordance with TAPPI T-460 OM-88 (2006) using a Lorentzen & Wettre Model SE 166 or 516 from Lorentzen & Wettre, Kista, Sweden. This test method measures the time required for 100 cubic centimeters (cm³) of air to be pushed through a 28.7 mm diameter sample having an area of 6.54 cm² (one square inch) under a pressure of approximately 1.21 kPa (4.9 inches) of water. The Gurley Hill porosity reported herein is expressed in seconds and represents an average of at least twelve individual measurements. The reported value represents an average of at least 12 individual measurements. The lower the Gurley Hill porosity, the greater the air permeability of the sheet.

The hydrostatic head is a measure of the resistance of a sheet to penetration by liquid water under a static load. Herein the hydrostatic head is determined based on AATCC 127 (2018). The hydrostatic head is reported in cm of water column. The hydrostatic head is measured on a FX 3000 HydroTester III from TexTest AG, Schwerzenbach, Switzerland. Water in contact with one side of a 102.6 cm² section of a sample is pressurized at a rate of 60 +/- 3 cmH₂O/min until three areas of the sample are penetrated by the water. The reported hydrostatic head is the average of at least 6 individual measurements. A higher hydrostatic head value refers to a sheet having a higher resistance to water penetration, that is having a lower water permeability. For a laminated product, the surface of the sheet with the barrier function is the surface in contact with the water for measurement

The moisture vapor transmission rate (MVTR) is measured according to EN ISO 12572 (2001), "Hygrothermal performance of building materials and products, Climate C", using a Gintronic Gravitest 6400 with an ES 420A balance from MRS Seitter, Lenning-Brück, Germany. The following settings are applied. The measurement is performed at 23°C with a relative humidity of 100 % in the cups and an air flow above the samples of test material of 2.5 m/s at a relative humidity of 50 %, and using a measurement interval of 30 minutes. A method using multiple layers of the test material is used to eliminate the impacts of the air layer above the water in each cup and of the boundary layer above each sample of test material.

Five test cups are each filled with water to a height of 15 mm from the top. Two of the test cups are then closed using one layer of test material, one of the test cups is closed using two layers of test material, and the two remaining test cups are closed with three layers of test material. The test is then performed with the five test cups in the same instrument at the same time. The weights of the test cups are monitored until the rate of weight loss from each test cup stabilizes to within +/-5 % during 5 successive measurements. The rate of weight loss is then divided by the upper cross-sectional area of the test cup through which water vapor has diffused to give a water vapor transmission rate per cup (WDD in g/m²/day), and the total resistance to the water vapor diffusion (Sd, in cm of equivalent air layer thickness) for each cup is calculated using the formula: $Sd = 2366 / WDD$

The Sd values for each cup are then plotted against the number of layers of test material used for that cup and the slope of a line through the points is determined by linear regression. This slope (SDML) represents the incremental increase in water vapor diffusion resistance created by adding one layer of test material. This is then converted back to a moisture vapor transmission rate for one layer of test material by performing the reverse calculation: $MVTR = 2366 / SDML$

The reported value is for one measurement, which inherently averages the property for ten individual samples of test material.

The Ret (resistance to evaporative heat loss through the sample) is a measure of the breathability of a fabric, with lower values corresponding to higher breathability. The Ret is measured according to EN 31092 / ISO 11092 and expressed in m²Pa/W. The Hohenstein Comfort Rating System indicates that breathable fabrics have Ret values below 30 m² Pa/W, very breathable fabrics have Ret values below 13 m^{2p}a/W, and extremely breathable fabrics have Ret values of below 6 m²Pa/W.

Thickness of the sheet is measured according to standard EN ISO 534 (2005) using a Model SE 243 Paper Thickness Gauge from Lorentzen & Wettre, Kista, Sweden. The sheet is measured using a probe having a circular area of 2 cm² with an applied pressure of 50 kPa. The time to lower the probe is 2 seconds and the hold time is 4 seconds. The reported value represents an average of at least 100 individual measurements.

The total crystallinity index is determined as follows. A diffractometer in reflection θ-2θ Bragg-Brentano geometry (http://prism.mit.edu/xray/oldsite/Basics%20of%20X-Ray%20Powder%20Diffraction.pdf) is fitted with a Cu-K_{α} x-ray tube source with wavelength of 1.54 Å and a 1-dimensional detector. A parabolic mirror with a 1/16° fixed slit and 20mm mask is used to create a parallel incident x-ray beam while a fixed slit of 1/8°, Soller slits of 0.04 rad and a nickel Cu-K_{β} filter are employed on the diffracted side before the detector. Each sample is 32 mm in diameter and is mounted onto low background, flat silicon wafer holders. The sample holder is mounted horizontally at the center of the diffractometer and normal to the scattering vector. During the measurement, the sample rotates in this plane.

The method used for the determination of the total crystallinity index is based on the ratio of the scattering intensity of the crystalline regions to the total intensity as described in S.L. Aggarwal, G.P. Tilley, Determination of crystallinity in polyethylene by X-Ray diffractometer, Journal of Polymer Science, Vol. 18, pp. 17-26, 1955. The analysis reported in this publication only considers the case in which the orthorhombic phase is present. Polyethylene can also crystallize in the monoclinic phase. In the current case, the procedure as described below is used to determine the crystallinity of the polyethylene samples using MATLAB. The scattering angle 2θ of the orthorhombic and monoclinic peaks can vary by about +/- .15° due to instrumental differences, sample height/texture and material nature.
1. Data are shifted on the 2θ axis such that the maximum intensity of the orthorhombic 110 peak occurs at 21.55°. Sample height variations can cause this shift in 2θ.
2. A local linear background, drawn from 2θ = 13±0.5° to 28±0.5° in scattering angle, is subtracted.
3. The amorphous portion of the pattern is fitted using two Gaussian peaks which are required to touch the data points in the ranges of [15.0° to 18.65°], [22.65° to 22.75°], and [25.2° to 28°] 2θ and which are centered around 18.1° and 21.6° 2 θ, with peak full widths at half maximum (FWHM) of 4°-5° to give a total integrated intensity Iₐₘₒᵣₚₕₒᵤₛ.
4. The total amorphous portion is then subtracted from the full pattern.
5. The remaining intensity is assumed to be crystalline in nature, belonging to the orthorhombic or monoclinic phases, and is fitted with the following peaks having respective integrated intensities:
   1) Orthorhombic 110 peak: 21.55°, Pearson VII peak shape, I_{110,O}.
   2) Orthorhombic 200 peak: 23.8°, Pearson VII peak shape, I_{200,O}.
   3) Additional peak to fit asymmetry of the orthorhombic 110 peak: 21.0°, Pearson VII peak shape. I_{110,A}. The subscript "A" stands for asymmetric.
   4) Monoclinic 010 peak: 19.5°, Pearson VII peak shape, I_{010,M}.
   5) Monoclinic 200 peak: 23.1°, Pearson VII peak shape I_{200,M}.
      Typical Peak FWHMs vary between 0.5° and 1°. Pearson VII M-values are allowed to vary from 1-100, but typically fall around 5 for each peak. If no monoclinic peak is visible at 19.5°, then both monoclinic peaks are set to zero intensity. Peak positions and widths are allowed to vary slightly to obtain a good fit.
6. The total crystallinity index is calculated from the ratio of crystalline scattering to total scattering. The crystalline scattering is defined as the sum of the integrated intensities from the crystalline peaks (monoclinic and orthorhombic). The total scattering is defined as the sum of the integrated intensity of crystalline and amorphous peaks: $crystallinity index = CI = \frac{{I}_{110 , O} + {I}_{200 , O} + {I}_{110 , A} + {I}_{010 , M} + {I}_{200 , M}}{{I}_{110 , O} + {I}_{200 , O} + {I}_{110 , A} + {I}_{010 , M} + {I}_{200 , M} + {I}_{amorphous}}$

Accordingly, the partial crystallinity indices *CI*_{orthorhombic} and *CI*_{monoclinic} are calculated respectively from these expressions ${CI}_{orthorhombic} = \frac{{I}_{110 , O} + {I}_{200 , O} + {I}_{110 , A}}{{I}_{110 , O} + {I}_{200 , O} + {I}_{110 , A} + {I}_{010 , M} + {I}_{200 , M} + {I}_{amorphous}}$ ${CI}_{monoclinic} = \frac{{I}_{010 , M} + {I}_{200 , M}}{{I}_{110 , O} + {I}_{200 , O} + {I}_{110 , A} + {I}_{010 , M} + {I}_{200 , M} + {I}_{amorphous}}$

Melting temperature is determined by differential scanning calorimetry, following the guidance provided in ASTM D3418 (Standard Test Method for Transition Temperatures and Enthalpies of Fusion and Crystallization of Polymers by Differential Scanning Calorimetry) and ASTM Standard F2625 (Standard Test Method for Measurement of Enthalpy of Fusion, Percent Crystallinity and Melting Point of Ultra-High-Molecular weight polyethylene by means of differential scanning calorimetry). For polyethylene, heating and cooling is performed under inert gas at a rate of 10°C/minute, heating the sample first from room temperature to 210°C, then cooling the sample back to room temperature, and subsequently heating the sample a second time to 210°C. The melting point reported herein is the peak temperature of the endotherm of the second heating cycle. For polypropylene the same procedure applies - where the maximum temperature is 230°C.

The melt flow rate is determined according to the method described in ISO 1133 (Plastics - Determination of the melt mass-flow rate (MFR) and the melt volume-flow rate (MVR) of thermoplastics). The melt flow rate for polyethylene is determined under condition "D" at a temperature of 190°C and using a mass of 2160 grams. The melt flow rates of other polyolefins are performed at different temperatures as specified in ISO 1133.

Density is determined according to the method described in ISO 1183 (Plastics - Methods for determining the density of non-cellular plastics).

The term "polymer" is intended to embrace, without limitation, homopolymers, copolymers (such as for example, block, graft, random, and alternating copolymers), terpolymers, etc., and blends and modifications thereof. Furthermore, unless otherwise specifically limited, the term "polymer" shall include all possible geometrical configurations of the material. These configurations include, but are not limited to, isotactic, syndiotactic, and random symmetries.

The term "polyethylene" is intended to embrace not only homopolymers of ethylene, but also copolymers and terpolymers wherein at least 85 % of the recurring units are ethylene units. One useful polyethylene is high-density polyethylene which has a melting temperature of about 123°C to about 140°C, a density in the range of 0.94 to 0.98 grams per cubic centimeter, and a melt flow rate (ISO 1133 condition D, 190°C/2160 grams) of between 0.1 g/10min and 100 g/10min, preferably less than 4 g/10min.

The term "polypropylene" is intended to embrace not only homopolymers of propylene but also copolymers and terpolymers where at least 85 % of the recurring units are propylene units. Furthermore, unless otherwise specifically limited, the term "polypropylene" shall include all possible geometrical configurations of the material. These configurations include, but are not limited to, isotactic, syndiotactic, and random symmetries.

The term "polymer type" refers to the chemical class into which the polymer falls, for example, polyethylene, polypropylene, etc.

The term "plexifilamentary" refers to a three-dimensional integral network or web of a multitude of thin, ribbon-like, fibrils of random length and a median fibril width of less than about 25 microns. In plexifilamentary structures, the fibrils are generally coextensively aligned with the longitudinal axis of the structure, and they intermittently unite and separate at irregular intervals in various places throughout the length, width, and thickness of the structure to form a continuous three-dimensional network or web.

The terms "spin agent" or "spin agent composition" refers to a composition comprising one or more solvents and any additives that are used to initially dissolve the polymer(s) to form the spin fluid. Suitable additives include stabilizers, such as antioxidants or acid scavengers.

The term "spin fluid" refers to a solution for spinning in a flash-spinning process comprising a polymer and a spin agent. The solution may also include one or more additives.

The term "cloud point pressure" refers to the pressure at which, at constant temperature, a clear single phase spin fluid transitions from a clear solution to a cloudy, two-phase dispersion. At the cloud point pressure, a clear spin fluid becomes turbid.

Atmospheric pressure means 101.325 kPa. Essentially atmospheric pressure means 101.325 kPa ± 5 %.

The hardness of the rubber is determined based on DIN ISO 7619-1 (2010) - Rubber, vulcanized or thermoplastic - Determination of indentation hardness - Part 1: Durometer method (Shore hardness). The hardness is reported in Shore A.

As used herein, the singular forms "a," "an," and "the" include the plural, and reference to a particular numerical value includes at least that particular value, unless the context clearly dictates otherwise. When a range of values is expressed, another embodiment includes from the one particular value and/or to the other particular value. Similarly, when values are expressed as approximations, by use of the antecedent "about," it will be understood that the particular value forms another embodiment. All ranges are inclusive and combinable.

### Bonded Sheet of Nonwoven Flash-spun Plexifilamentary Fibrils

Provided herein is a thermally bonded sheet of nonwoven flash-spun plexifilamentary fibrils, the sheet having
(a) a basis weight from 32 g/m² to 60 g/m²,
(b) an average trapezoidal tear resistance above 20 N,
(c) an average tensile strength from 40 N to 90 N,
(d) a BET surface area from 4 m²/g to 8 m²/g,
(e) a Gurley Hill porosity of 2 seconds to 30 seconds, and
(f) a hydrostatic head above 105 cmH₂O.

The thermally bonded sheet described herein exhibits a desired combination of moderate basis weight, high trapezoidal tear resistance, high tensile strength, and low BET surface, which furthermore has a desired improved breathability.

In some embodiments, the bonded sheet has a basis weight from 32 g/m² to about 56 g/m², in other embodiments, the bonded sheet has a basis weight from about 40 g/m² to about 54 g/m², and in other embodiments, the bonded sheet has a basis weight from about 40 g/m² to about 49 g/m².

In some embodiments, the bonded sheet has a BET surface area from about 5 m²/g to about 7 m²/g, and in other embodiments, the bonded sheet has a BET surface area from about 6 m²/g to about 7 m²/g.

In some embodiments, the bonded sheet has an average trapezoidal tear strength from about 22 N to about 50 N, and in other embodiments, the bonded sheet has an average trapezoidal tear strength from about 25 N to about 45 N. In some embodiments, the bonded sheet has an average trapezoidal tear strength of above 30 N, in other embodiments, the bonded sheet has an average trapezoidal tear strength from about 30 N to about 55 N, and in other embodiments, the bonded sheet has an average trapezoidal tear strength from about 30 N to about 52 N. In some embodiments, the bonded sheet has an average trapezoidal tear strength from about 30 N to about 50 N, and on other embodiments, the bonded sheet has an average trapezoidal tear strength of about 35 N to about 45 N.

In some embodiments, the bonded sheet has an average trapezoidal tear strength normalized to basis weight from 0.5 N/g/m² to 0.8 N/g/m², in other embodiments, the bonded sheet has an average trapezoidal tear strength normalized to basis weight from about 0.55 N/g/m² to about 0.65 N/g/m², and in other embodiments, the bonded sheet has an average trapezoidal tear strength normalized to basis weight from about 0.65 N/g/m² to 0.8 N/g/m².

In some embodiments, the bonded sheet has an average trapezoidal tear strength normalized to the product of BET surface area and basis weight from 0.082 N to 0.125 N, in other embodiments, the bonded sheet has an average trapezoidal tear strength normalized to the product of BET surface area and basis weight from about 0.085 N to about 0.110 N, and in other embodiments, the bonded sheet has an average trapezoidal tear strength normalized to the product of BET surface area and basis weight from about 0.110 N to 0.125 N.

In some embodiments, the bonded sheet has an average tensile strength from about 45 N to about 80 N, in other embodiments, the bonded sheet has an average tensile strength from about 60 N to 90 N, and in other embodiments, the bonded sheet has an average tensile strength from about 60 N to about 80 N.

In some embodiments, the bonded sheet has a tensile strength in at least one direction, selected from the machine direction (MD) and the transverse direction (XD), from about 35 N to about 90 N, in other embodiments, the bonded sheet has a tensile strength in at least one direction, selected from the machine direction (MD) and the transverse direction (XD), from about 45 N to about 90 N, in other embodiments, from about 60 N to about 90 N, and in other embodiments, from about 60 N to about 80 N.

In some embodiments, the bonded sheet has a tensile strength in the machine direction (MD) which is about 80 % to about 120 % of the tensile strength in the transverse direction (XD), in other embodiments, the bonded sheet has a tensile strength in the machine direction (MD) which is about 90 % to about 110 %, or about 95 % to about 105 % of the tensile strength in the transverse direction (XD).

In some embodiments, the bonded sheet has a Gurley Hill porosity from about 3 seconds to about 25 seconds, in other embodiments, the bonded sheet has a Gurley Hill porosity from 2 seconds to about 15 seconds, and in other embodiments, the bonded sheet has a Gurley Hill porosity from about 3 seconds to about 10 seconds.

In some embodiments, the bonded sheet has a total crystallinity index of less than 72 %, in other embodiments, the bonded sheet has a total crystallinity index from about 60 % to about 72 %, and in other embodiments, the bonded sheet has a total crystallinity index from about 62 % to about 68 %. In further embodiments, the crystallinity is based on the orthorhombic and monoclinic crystalline structures.

In some embodiments, the bonded sheet has a hydrostatic head from above 105 cmH₂O to more than about 200 cmH₂O, or from above 105 cmH₂O to about 170 cmH₂O, or from above 105 cmH₂O to about 140 cmH₂O, or from above 105 cmH₂O to about 135 cmH₂O, or from above 105 cmH₂O to about 130 cmH₂O, or from above 105 cmH₂O to about 125 cmH₂O and in other embodiments, the bonded sheet has a hydrostatic head from about 115 cmH₂O to about 170 cmH₂O.

In some embodiments, the bonded sheet has a handle-o-meter stiffness from 0.05 N to 0.50 N, in other embodiments, the bonded sheet has a handle-o-meter stiffness from about 0.10 N to about 0.45 N, and in other embodiments, the bonded sheet has a handle-o-meter stiffness from about 0.10 N to about 0.30 N.

In some embodiments, the bonded sheet has a Moisture Vapor Transmission Rate (MVTR) of 5500 g/m²/day or more, in other embodiments, the bonded sheet has a MVTR of about 8000 g/m²/day or more, in other embodiments, the bonded sheet has a MVTR of about 9000 g/m²/day to about 15000 g/m²/day or more, and in other embodiments, the bonded sheet has a MVTR of about 10000 g/m²/day or more.

In some embodiments, the bonded sheet has a Ret below 13 m²Pa/W, in other embodiments, the bonded sheet has a Ret below 6 m²Pa/W, in other embodiments, the Ret is between 13 m²Pa/W and 3 m²Pa/W, and in other embodiments between 6 m²Pa/W and 3 m²Pa/W.

In some embodiments, the flash-spun plexifilamentary fibrils of the bonded sheet are comprised of a polyolefin. In some embodiments, the polyolefin is selected from polyethylene (PE), polypropylene (PP), and blends/mixtures thereof. Particularly preferred polyolefins are polyethylene (PE), in particular high-density polyethylene (HDPE), blends/mixtures of high-density polyethylene (HDPE) and low-density polyethylene (LDPE), or blends/mixtures of high-density polyethylene (HDPE) and linear low-density polyethylene (LLDPE). In some embodiments, the polyolefin is a high-density polyethylene (HDPE).

In some embodiments, the flash-spun plexifilamentary fibrils of the bonded sheet are comprised of a high-density polyethylene, and the sheet has a basis weight from about 32 g/m² to about 37 g/m², an average trapezoidal tear strength from above 20 N to about 26 N, an average tensile strength from 40 N to about 60 N, and a BET surface from 4 m²/g to 8 m²/g. In some embodiments, the flash-spun plexifilamentary fibrils of the bonded sheet are comprised of a high-density polyethylene, and the sheet has a basis weight from about 32 g/m² to about 37 g/m², an average trapezoidal tear strength from above 20 N to about 26 N, an average tensile strength from 40 N to about 60 N, a BET surface from 4 m²/g to 8 m²/g, and a Gurley Hill porosity of 2 seconds to about 15 seconds.

In some embodiments, the flash-spun plexifilamentary fibrils of the bonded sheet are comprised of a high-density polyethylene, and the sheet has a basis weight from about 39 g/m² to about 45 g/m², an average tensile strength from about 50 N to about 80 N, a BET surface from 4 m²/g to 8 m²/g, and an average trapezoidal tear strength from above 20 N to about 36 N, in particular from above 20 N to about 32 N or about 24 N to about 36 N. In some embodiments, the flash-spun plexifilamentary fibrils of the bonded sheet are comprised of a high-density polyethylene, and the sheet has a basis weight from about 39 g/m² to about 45 g/m², an average tensile strength from about 50 N to about 80 N, a BET surface from 4 m²/g to 8 m²/g, an average trapezoidal tear strength from above 20 N to about 36 N, in particular from above 20 N to about 32 N or about 24 N to about 36 N, and a Gurley Hill porosity of 2 seconds to about 15 seconds.

In some embodiments, the flash-spun plexifilamentary fibrils of the bonded sheet are comprised of a high-density polyethylene, and the sheet has a basis weight from about 44 g/m² to about 51 g/m², an average tensile strength from about 55 N to about 85 N, a BET surface from 4 m²/g to 8 m²/g, and an average trapezoidal tear strength from about 24 N to about 38 N, in particular from about 24 N to about 35 N or about 28 N to about 38 N. In some embodiments, the flash-spun plexifilamentary fibrils of the bonded sheet are comprised of a high-density polyethylene, and the sheet has a basis weight from about 44 g/m² to about 51 g/m², an average tensile strength from about 55 N to about 85 N, a BET surface from 4 m²/g to 8 m²/g, an average trapezoidal tear strength from about 24 N to about 38 N, in particular from about 24 N to about 35 N or about 28 N to about 38 N, and a Gurley Hill porosity of 2 seconds to about 15 seconds.

Applicant has found that the bonded sheets described herein surprisingly have a very good balance of breathability, tear resistance, and tensile strength, which makes them very useful and comfortable for use in garments, including, but not limited to, protective apparel such as full body protective clothing and partial body protective clothing (including, but not limited to, gowns, overalls, coveralls, trousers, coats, sleeves, hoods, shoe protectors, aprons, etc.), and further applications. Prior art nonwoven sheets made in a flash-spinning process using a hydrocarbon spin agent tend to suffer from a reduction of the trapezoidal tear resistance when the air permeability is increased, contrary to the bonded sheets described herein having a unique balance of properties.

### Preparation of Bonded Sheet of Nonwoven Flash-spun Plexifilamentary Fibrils of Polymer

In a further embodiment, there is provided a process for the preparation of a sheet of nonwoven flash-spun plexifilamentary fibrils which comprises the steps of:
(i) generating a spin fluid comprising
   (a) from 8 to 12 weight percent of a polymer, based on the total amount of the spin fluid, and
   (b) a spin agent comprising a chlorine-containing solvent, selected from dichloromethane, cis-1,2-dichloroethylene and trans-1,2-dichloroethylene, in combination with a fluorine-containing solvent,
(ii) flash-spinning the spin fluid at a temperature at or above 200°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and
(iv) thermally bonding by embossing the consolidated sheet to obtain a bonded sheet.

### Flash-Spinning, Collecting, and Consolidating

Flash-spinning is a method for producing fibrils having a unique plexifilamentary structure. It involves preparing a solution of a fibril-forming polymer in a spin agent (the spin fluid) at a pressure above the vapor pressure of the spin agent and at a temperature above the normal boiling point of the spin agent, and releasing that spin fluid into a zone of substantially lower temperature and pressure such that the spin agent flash evaporates and the polymer solidifies in the form of plexifilamentary fibrils. Suitable flash-spinning processes and equipment which can be used herein are described in US 3,081,519, US 3,227,794, US 3,860,369, and US 7,744,989.

The formed plexifilamentary fibrils of polymer are discharged from each spin orifice, and the shape of these plexifilamentary fibrils of polymer may be modified by any methods known in the art. In some embodiments, the plexifilamentary fibrils of polymer discharged from each spin orifice may be modified by passing into a shroud such as described on US 3,387,326, in other embodiments by passing into a slotted outlet such as described in US 3,467,744 or US 5,788,993, and in other embodiments by passing into a slot fan jet as described in US 8,114,325. In some embodiments, streams of fibrils from multiple orifices may exit via a common slot as described in US 3,564,088.

Sheets comprising plexifilamentary fibrils of polymer can be formed by any method known in the art. In some embodiments, the stream of fibrils discharged from each spin orifice is directed towards a deflector device which alternately directs the stream of fibrils to the left and right onto a moving collecting device such that the fibrils accumulate in the form of a sheet, formed from fibrils oriented in an overlapping, multi-directional configuration. Deflection of the stream of fibrils may be achieved by any suitable means known in the art, including, but not limited to, those described in US 3,277,526 and US 3,387,326, US 3,169,899, US 3,497,918, US 3,593,074, US 3,851,023 and US 3,860,369, US 4,148,595, US 5,045,258, US 5,643,524, US 5,731,011, US 5,750,152 and WO 92/20511 A1. The stream of fibrils may also be laid down to form a sheet without deflection as described in US 5,788,993 and US 8,114,325. The method of forming a sheet may further utilize structures in the spin cell such as those described in US 5,123,983, US 5,296,172, and WO 92/20511 A1.

In some embodiments, the streams of fibrils are discharged from spin orifices located on a rotating support, and the fibrils are collected on a collecting belt which surrounds the rotating arrangement circumferentially as described in US 7,118,698, US 7,621,731, US 7,786,034, and US 7,998,388.

The sheet formed by flash-spinning as described herein may be consolidated by applying a small amount of pressure to the sheet. In some embodiments, the sheet may be passed under a roller which applies pressure to the sheet to form a lightly consolidated sheet.

A broad range of different polymers and blends/mixtures thereof can be used in the process described herein. In some embodiments, the polymer is selected from polyolefins. In some embodiments, polyolefins are polyethylene (PE), polypropylene (PP), and blends/mixtures thereof. Particularly preferred polyolefins are polyethylene (PE), in particular high-density polyethylene (HDPE), blends/mixtures of high-density polyethylene (HDPE) and low-density polyethylene (LDPE), or blends/mixtures of high-density polyethylene (HDPE) and linear low-density polyethylene (LLDPE). In some embodiments, the polyolefin comprises at least 80 weight percent of high-density polyethylene (HDPE), based on the total amount of polymer. In other embodiments, the polyolefin comprises at least 90 weight percent of high-density polyethylene (HDPE), based on the total amount of polymer, and in other embodiments, the polyolefin comprises at least 95 weight percent of high-density polyethylene (HDPE), based on the total amount of polymer.

The spin agent comprises a chlorine-containing solvent, selected from dichloromethane, cis-1,2-dichloroethylene and trans-1,2-dichloroethylene, in combination with a fluorine-containing solvent. The spin fluid comprises the polymer in an amount from 8 to 12 weight percent, based on the total amount of the spin fluid, in other embodiments, the spin fluid comprises the polymer in an amount from about 8.5 to about 11.5 weight percent, based on the total amount of the spin fluid, and in other embodiments, the spin fluid comprises the polymer in an amount from 9 to 11.5 weight percent, based on the total amount of the spin fluid.

In some embodiments, the spin fluid comprises the spin agent in an amount from about 88 to about 92 weight percent, based on the total amount of the spin fluid, in other embodiments, the spin fluid comprises the spin agent in an amount from about 88.5 to about 91.5 weight percent, based on the total amount of the spin fluid, and in other embodiments, the spin fluid comprises the spin agent in an amount from about 88.5 to about 91 weight percent, based on the total amount of the spin fluid.

In some embodiments, the flash-spinning is performed at a temperature from 200°C to about 230°C, in other embodiments, from about 205°C to about 225°C, and in other embodiments, from about 210°C to about 220°C.

In some embodiments, the spin fluid comprises the polymer in an amount from 8 to 12 weight percent, based on the total amount of the spin fluid, and the flash-spinning is performed at a temperature from about 205°C to about 230°C, and in other embodiments, the spin fluid comprises the polymer in an amount from about 9 to about 11.5 weight percent, based on the total amount of the spin fluid, and the flash-spinning is performed at a temperature from about 205°C to about 220°C, in particular from about 210°C to about 220°C.

In some embodiments, the spin agent comprises a chlorine-containing solvent, selected from dichloromethane, cis-1,2-dichloroethylene and trans-1,2-dichloroethylene, in combination with a fluorine-containing solvent. In some embodiments, the spin agent comprises a chlorine-containing solvent, selected from dichloromethane, cis-1,2-dichloroethylene and trans-1,2-dichloroethylene, in combination with a fluorine-containing solvent which is a hydrofluorocarbon having three to six carbon atoms, perfluorocarbons having three to six carbon atoms or a hydrofluoroether. In some embodiments, the perfluorocarbons or hydrofluorocarbons having three to six carbon atoms of the spin agent are perfluoropentane, perfluorohexane, 1,1,1,3,3-pentafluorobutane, 1H,4H-perfluorobutane, 2H,3H-decafluoropentane, 1H,6H-perfluorohexane, or 1H-perfluorohexane.

In some embodiments, the spin agent consists essentially of a mixture of dichloromethane and 2H,3H-decafluoropentane, 1H,4H-perfluorobutane, 1H,6H-perfluorohexane, 1H-perfluorohexane, perfluoropentane, perfluorohexane and 1,1,1,3,3-pentafluorobutane, in other embodiments, the spin agent consists essentially of from about 70 to about 85 weight percent dichloromethane and from about 15 to about 30 weight percent 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane, and in other embodiments, from about 75 to about 85 weight percent dichloromethane and from about 15 to about 25 weight percent 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane.

In some embodiments, the spin agent consists of a mixture of dichloromethane and 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane, in other embodiments, the spin agent consists of from about 70 to about 85 weight percent dichloromethane and from about 15 to about 30 weight percent 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane, and in other embodiments, from about 75 to about 85 weight percent dichloromethane and from about 15 to about 25 weight percent of 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane.

In some embodiments, the plexifilamentary fibrils are spun at a spin temperature from about 205°C to about 230°C using a spin fluid comprising 8 to 12 weight percent polymer and comprising a spin agent which comprises, consists essentially of, or consists of dichloromethane and 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane. In other embodiments, the plexifilamentary fibrils are spun at a spin temperature from about 210°C to about 230°C using a spin fluid comprising about 9 to about 11.5 weight percent polymer and comprising a spin agent which comprises, consists essentially of, or consists of dichloromethane and 2H,3H-decafluoropentane, 1H,4H-perfluorobutane, 1H,6H-perfluorohexane, 1H-perfluorohexane, perfluoropentane, perfluorohexane, or 1,1,1,3,3-pentafluorobutane.

The spin fluid may include additives, such as antioxidants or acid scavengers in minor amounts. In some embodiments, the spin fluid comprises additives in an amount of about 1.5 weight percent or less, based on the total amount of the spin fluid, and in other embodiments in an amount of about 0.1 weight percent or less, based on the total amount of the spin fluid.

### Thermal Bonding By Embossing

After the sheet is formed into a consolidated sheet as described herein, the consolidated sheet is then subjected to thermal bonding via embossing including, but not limited to, using heated embossing roll(s) and rubber coated back-up roll(s) to bond one or two sides of the consolidated sheet, to form a thermally bonded sheet.

In some embodiments, at least one side of the consolidated sheet is embossed, in other embodiments, only one side of the consolidated sheet is embossed, and in other embodiments, both sides of the consolidated sheet are embossed.

The embossing roll(s) apply heat and pressure locally over a portion of the surface of the consolidated sheet to bond the consolidated sheet and form an embossed pattern. The degree of bonding can vary by adjusting the nip pressure, temperature, and length of time during which these are applied

In some embodiments, each embossing roll has a temperature of about 135°C to about 210°C during bonding, and in other embodiments, each embossing roll has a temperature of about 140°C to about 155°C during bonding.

In some embodiments, the static pressure in the nip of the embosser (nip pressure) is between about 150 kPa and about 750 kPa. An "embosser" as used herein means a pair of two rolls forming a nip, one being a heated embossing roll and the other being a rubber coated back-up roll. In other embodiments, the static pressure in the nip of the embosser is between about 150 kPa and about 500 kPa, and in other embodiments, from about 150 kPa to about 400 kPa.

In some embodiments, the consolidated sheet wraps the heated embosser roll such that the angle between the direction of entry and the direction of exit (the wrap angle) is from about 10° to about 140°, in other embodiments, the wrap angle is from about 10° to about 100°, and in other embodiments, the wrap angle is from about 10° to about 60°.

In some embodiments, the consolidated sheet may be in contact with pre-heat rolls before thermally bonding and/or may be in contact with cooling rolls after thermally bonding, in a configuration as described in US 5,972,147. In some embodiments, the temperature of the pre-heat roll may be varied from 50°C to 20°C below the melting peak temperature of the polymer.

Each side of the consolidated sheet may be embossed using the same pattern or a different pattern. In some embodiments, the consolidated sheet is embossed on both sides using the same pattern, and in other embodiments, the consolidated sheet is embossed on both sides using different patterns. In some embodiments, the consolidated sheet is embossed on one side using a point pattern and, on another side, using a linen pattern, and in other embodiments, the consolidated sheet is embossed on one side using a rib pattern and, on another side, using a linen pattern.

In some embodiments, the one or more rubber coated back-up roll(s) have a hardness of 50 to 70 Shore A. The hardness of the rubber coated back-up rolls may be the same or different if two or more embossment steps are performed.

The patterns on the embossing roll(s) may be any suitable depth known in the art. Each embossing roll may have patterns at the same depth or at different depths. In some embodiments, the consolidated sheet is embossed using embossing rolls having patterns at different depths such that certain portions of the consolidated sheet are subjected to more bonding than others.

The percentage of surface area on each side of the consolidated sheet that is embossed may vary. In some embodiments, from about 12 % to about 85 % of the area of at least one side of the consolidated sheet is embossed, in other embodiments, from about 20 % to about 50 %, in other embodiments, from about 26 % to about 45 %, and in other embodiments, from about 20 % to about 40 %. In some embodiments, from about 12 % to about 50 % of the area of both sides of the consolidated sheet is embossed, in other embodiments, from about 20 % to about 50 %, in other embodiments, from 26 % to about 45 %, and in other embodiments, from about 20 % to about 40 %.

In some embodiments, about 50 % to about 85 % of the area of one side of the consolidated sheet is embossed using a linen pattern, and about 20 % to about 40 % or from about 26 % to about 45 % of the area of the other side of the consolidated sheet is embossed using a rib pattern. In some embodiments, about 50 % to about 85 % of the area of one side of the consolidated sheet is embossed using a linen pattern, and about 20 % to about 40 % or from about 26 % to about 45 % of the area of the other side of the consolidated sheet is embossed using a point pattern.

In other embodiments, about 20 % to about 40 % or from about 26 % to about 45 % of the area of one side of the consolidated sheet is embossed using a rib pattern, and about 20 % to about 40 % or from about 26 % to about 45 % of the area of the other side of the consolidated sheet is embossed using a rib pattern. In other embodiments, about 20 % to about 40 % or from about 26 % to about 45 % of the area of one side of the consolidated sheet is embossed using a point pattern, and about 20 % to about 40 % or from about 26 % to about 45 % of the area of the other side of the consolidated sheet is embossed using a point pattern.

The process described herein provides a bonded sheet of nonwoven flash-spun plexifilamentary fibrils having sufficient strength while still having high breathability.

In some embodiments after the consolidated sheet is thermally bonded as described herein, the thermally bonded sheet is then subjected to a mechanical softening process to obtain a softened sheet of nonwoven flash-spun plexifilamentary fibrils. During the mechanical softening process described herein, the thermally bonded sheet is passed through one or more nips between rotating rolls driven at substantially the same speed as the speed of the thermally bonded sheet as it passes through the rolls. This is in contrast to some prior art softening processes where the thermally bonded sheet is passed over a sequence of rolls that are driven at a different speed than the speed of the thermally bonded sheet. This difference in speed creates a rubbing effect that leads to lose fibrils, which can jeopardize the barrier properties of the softened sheet.

In some embodiments, the thermally bonded sheet is mechanically softened by passing it through one or more nips between rotating rolls, wherein each roll has interpenetrating pins and rotates in the opposite direction as the other roll. The pins of each roll may be arranged in an array and have ends that are equidistant from the roll's axis. The array of pins on one roll interpenetrates the array of pins on the opposite roll by an amount that is at least equal to the thickness of the sheet. Various geometric configurations may be used for the interpenetrating pins, including, but not limited to, blunt pins, meaning a pin that includes at least a distal end that has a blunt surface and a shaft that has a surface. A blunt surface, i.e., a surface not having a sharp point, includes, but is not limited to, a blunt surface that is rounded, forming a smooth curving surface, or a blunt surface that is flat.

In some embodiments the thermally bonded sheet is subjected to a mechanical softening process as described in US 3,408,709. In some embodiments, the thermally bonded sheet is subjected to a mechanical softening process as described in US 5,966,785 and US 6,195,854. In some embodiments, the thermally bonded sheet is subjected to a mechanical softening process as described in US 3,920,874 and US 3,811,979.

In some embodiments, an antistatic treatment is applied to the thermally bonded or bonded and softened sheet. Antistatic treatment improves electrostatic properties of a textile, in particular surface resistivity. In some embodiments, the antistatic treatment is applied by applying a coating composition comprising an antistatic compound. In some embodiments, the antistatic compound is a phosphate ester, in particular a phosphate ester defined by the formula: Mₙ R₃₋ₙ PO₄, where M is selected from the group consisting of lithium, sodium, potassium, and ammonium ions, R represents an alkyl group containing 3 to 5 carbon atoms, and n is selected from the integers 1 and 2. In some embodiments, the antistatic compound is selected from potassium di-n-propyl phosphate, dipotassium n-propyl phosphate, potassium di-i-propyl phosphate, dipotassium i-propyl phosphate, potassium di-n-butyl phosphate, dipotassium n-butyl phosphate, potassium di-i-butyl phosphate, dipotassium i-butyl phosphate, and combinations thereof.

In some embodiments, there is provided a sheet of nonwoven flash-spun plexifilamentary fibrils obtained or obtainable by the process described herein.

In some embodiments, the obtained sheet has
(a) a basis weight from 32 g/m² to 60 g/m²;
(b) an average trapezoidal tear above 20 N;
(c) an average tensile strength from 40 N to 90 N;
(d) a BET surface area from 4 to 8 m²/g,
(e) a Gurley Hill porosity of 2 seconds to 30 seconds, and
(f) a hydrostatic head above 105 cmH₂O.

### Uses, Multilayer Structures, and Articles

The sheet of nonwoven flash-spun plexifilamentary fibrils as described herein has many uses and may be used in a variety of applications, including, but not limited to, multilayer structures, garments (including, but not limited to, protective apparel and gowns) and medical wrap.

Further embodiments relate to a multilayer structure comprising at least one sheet of nonwoven flash-spun plexifilamentary fibrils as described herein, and at least one further sheet or a film.

In some embodiments, the multilayer structure comprises a film that is a microporous film. In one embodiment, the microporous film is a film that is filled and stretched as described in US 9,809,004 B2. Microporous films from highly filled polymers, usually polyolefins, may be prepared by any methods known in the art. Typically, a combination of a polyolefin, usually a polyethylene, is compounded with a filler, usually calcium carbonate, and extruded and stretched into a film to form a microporous film. Suitable examples of microporous films include those described in US 4,472,328, US 4,350,655 and US 4,777,073. A multilayer structure comprising a microporous film and at least one sheet of nonwoven flash-spun plexifilamentary fibrils as described herein can be used in a variety of applications, including, but not limited to, protective apparel.

In some embodiments, the multilayer structure is a laminated structure comprising a microporous film laminated to at least one sheet of nonwoven flash-spun plexifilamentary fibrils as described herein. In some embodiments, a microporous film and a sheet of nonwoven flash-spun plexifilamentary fibrils may be laminated using an adhesive layer situated in contact with a least a portion of both the microporous film and the sheet of nonwoven flash-spun plexifilamentary fibrils, as described in US 9,809,004 B2, US 5,750,444 or US 5,294,258.

Further embodiments relate to use of the sheet of nonwoven flash-spun plexifilamentary fibrils as described herein for preparing a multilayer structure.

Further embodiments relate to use of the sheet of nonwoven flash-spun plexifilamentary fibrils as described herein for the production of garments.

Further embodiments relate to use of the multilayer structure as described herein for the production of garments.

Further embodiments relate to an article comprising at least one sheet of nonwoven flash-spun plexifilamentary fibrils as described herein or comprising at least one multilayer structure as described herein. In some embodiments, the article is selected from garments, protective apparel, and medical wraps. Protective apparel includes full body protective clothing and partial body protective clothing (including, but not limited to, gowns, overalls, coveralls, trousers, smocks, coats, sleeves, hoods, shoe protectors, aprons, etc.) and other garments whose purpose is to protect the wearer against exposure to hazardous materials in the environment, or to protect the wearer's environment against being contaminated by the wearer. In some embodiments, the article is a medical wrap for the packaging of medical items such as surgical instruments during sterilization.

### EXAMPLES

Different bonded sheets of nonwoven flash-spun plexifilamentary fibrils have been prepared. The experimental procedure and results are provided below. These examples are given to illustrate exemplary embodiments of the invention and should not be interpreted as limiting in any way.

### Materials Used

N-pentane, CAS Nr 109-66-0, has an atmospheric boiling point of 36.1°C, a molecular weight of 72.151 g/mol and a critical temperature of 196.7°C. The n-pentane used had a purity level above 95 percent by weight.

Cyclopentane, CAS Nr 287-92-3, has an atmospheric boiling point of 49.2°C, a molecular weight of 70.13 g/mol and a critical temperature of 238.6°C. The cyclopentane used had purity level above 95 percent by weight.

Dichloromethane, CAS Nr. 75-09-2, has an atmospheric boiling of 39.6°C, a molecular weight of 84.93 g/mol and a critical temperature of 236.68°C. The dichloromethane used had a purity level above 99.5 percent by weight.

2H,3H-decafluoropentane (HFC-4310-mee), CAS Nr. 138495-42-8, has an atmospheric boiling point of 55°C, a molecular weight of 252.05 g/mol and a critical temperature of 181°C. The 2H,3H-decafluoropentane used had a purity level above 99.5 percent by weight.

The polyethylene used had a density of 0.957 g/cm³ (ISO 1183), and melt flow rates of 0.74 g/10min (ISO 1133 condition D, 190°C/2.16 kg) and 22 g/10min (ISO 1133 condition G, 190°C/21.6 kg).

The flash-spun sheets in the examples are produced using the flash spinning process described by US 3,227,794 and US 3,851,023. US 3,227,794 describes a flash spinning process where the pressure is reduced below the cloud point of the spin fluid before it is released into a zone of substantially lower temperature and pressure such that the spin agent flash evaporates and the polymer solidifies in the form of plexifilamentary fibrils. The cloud point pressure for hydrocarbon spin agents is reported in, but not limited to, US 5,147,586, US 6,004,672, and US 6,638,470, and for mixtures of trans-1,2-DCE and DCM with fluorinated compounds in, but not limited to, US 6,004,672, US 7,300,968, and US 7,179,413.

### Results

### Comparative examples 1 to 6

A flash-spun sheet was produced using the flash-spinning process described by US 3,227,794 and US 3,851,023 at different spin temperatures using a spin fluid of 17 wt% polyethylene with a density >0.95 g/cm³ and a melt flow rate of 0.74 g/10min (ASTM 1238 190°C/2.16 kg) in a spin agent at a spin temperature of 190°C using a spin fluid of 17 wt% polymer in a hydrocarbon-based spin agent that was a mixture of n-pentane and cyclopentane (herein also referred to as "H").

The flash-spun sheet was subsequently thermally bonded and embossed. For all comparative examples 1 to 6, one side was embossed by passing the sheet through a nip formed between a heated roll with a linen pattern and a rubber roll having a hardness of 70 Shore A and the opposite side was embossed through a nip formed between an embosser roll having a rib pattern and a rubber roll having a hardness of 70 Shore A. The fabrics were subsequently mechanically softened by passing them through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheet.

The spinning, bonding, and softening conditions and sheet properties are reported in Table 1, below.

**Table 1: Summary of the sheet preparation of Comparative Examples 1 to 6.**

| **Example** | **CE1** | **CE2** | **CE3** | **CE4** | **CE5** | **CE6** |
|---|---|---|---|---|---|---|
| Spin agent | H | H | H | H | H | H |
| Spin temperature (°C) | 178 | 185 | 195 | 200 | 205 | 205 |
| Polymer concentration (wt%) | 17 | 17 | 17 | 17 | 17 | 17 |
| Spin pressure (bar) | 68 | 82 | 99 | 108 | 111 | 111 |
| Pre-heat | No | No | No | No | No | No |
| Embosser 1 | linen | linen | linen | linen | linen | linen |
| Rubber hardness (Shore A) | 70 | 70 | 70 | 70 | 70 | 70 |
| Nip pressure (kPa) | 553 | 553 | 553 | 553 | 553 | 553 |
| Wrap angle Embosser 1 (°) | 45 | 45 | 45 | 45 | 45 | 60 |
| Embosser 2 | rib | rib | rib | rib | rib | rib |
| Rubber hardness (Shore A) | 70 | 70 | 70 | 70 | 70 | 70 |
| Wrap angle Embosser 2 (°) | 85 | 85 | 85 | 85 | 85 | 105 |
| Softening/Pin interpenetration (mm) | 1.3 | 1.3 | 1.4 | 1.2 | 1.2 | 1.3 |
| Basis weight (g/m²) | 42.5 | 42.0 | 41.46 | 41.6 | 40.6 | 52.2 |
| Gurley (s) | 50.7 | 23.2 | 19.1 | 6.7 | 4.2 | 11.7 |
| MVTR (g/m²/day) | n.m. | n.m. | 5869 | 11111 | 16143 | 8514 |
| BET surface area (m²/g) | n.m. | 12.1 | 12.0 | 9.9 | 8.5 | 9.2 |
| Tensile Strength MD (N) | 74.7 | 82.6 | 76.5 | 71.3 | 62.5 | 87.4 |
| Tensile Strength XD (N) | 68.1 | 58.3 | 58.1 | 49.1 | 40.8 | 63.0 |
| Average tensile strength (N) | 71.4 | 70.5 | 67.3 | 60.2 | 51.6 | 75.2 |
| Trapezoidal tear resistance MD (N) | 30.9 | 28.9 | 23.5 | 21.3 | 19.3 | 28.4 |
| Trapezoidal tear resistance XD (N) | 23.3 | 20 | 17.5 | 17.0 | 15.0 | 20.4 |
| Average trapezoidal tear resistance | 27.1 | 24.5 | 20.5 | 19.2 | 17.2 | 24.4 |
| Average trapezoidal tear resistance normalized to basis weight (N*m²/g) | 0.65 | 0.58 | 0.48 | 0.46 | 0.41 | 0.47 |
| Average trapezoidal tear resistance normalized to product of BET surface area and basis weight (N) | n.m. | 0.048 | 0.048 | 0.046 | 0.048 | 0.051 |
| Handle-o-meter (qf) | n.m. | n.m. | 25.6 | 19.2 | 16.2 | 33.8 |
| Handle-o-meter (N) | n.m. | n.m. | 0.251 | 0.189 | 0.159 | 0.332 |
| Hydrostatic head (cmH₂O) | 125 | 26 | 125 | 119 | 108 | 145 |
| Total crystallinity index (%) | n.m. | 68.6 | n.m. | n.m. | 70.8 | 68.5 |
| Crystallinity index monoclinic (%) | n.m. | 1.3 | n.m. | n.m. | - | 1.0 |
| Crystallinity index orthorhombic (%) | n.m. | 67.3 | n.m. | n.m. | 70.8 | 67.5 |

### Comparative examples 7 to 8

A flash-spun sheet was produced using the flash-spinning process described by US 3,227,794 and US 3,851,023 at different spin temperatures using a spin fluid of a polyethylene having a density >0.95 g/cm³ and a melt flow rate of 0.74 g/10min (ISO 1133 190°C/2.16 kg) at different polymer concentrations in a spin agent that was a mixture of dichloromethane and 2H,3H-decafluoropentane (herein also referred to as "D"). The flash-spun sheet was subsequently thermally bonded and embossed. For comparative examples 7 to 8, one side was embossed by passing the sheet through a nip formed between a heated roll with a linen pattern and a rubber roll having a hardness of 70 Shore A and the opposite side was embossed through a nip formed between an embosser roll having a rib pattern and a rubber roll having a hardness of 70 Shore A. The fabrics were subsequently mechanically softened by passing them through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheet.

The spinning, bonding, and softening conditions and sheet properties are reported in Table 2, below.

**Table 2: Summary of the sheet preparation of Comparative Examples 7 and 8.**

| **Example** | **CE7** | **CE8** |
|---|---|---|
| Spin agent | D | D |
| Spin temperature (°C) | 200 | 190 |
| Spin pressure (bar) | 94 | 79 |
| Polymer concentration (wt%) | 13 | 14 |
| Pre-heat | No | No |
| Embosser 1 | linen | linen |
| Rubber hardness (Shore A) | 70 | 70 |
| Nip pressure (kPa) | 418 | 418 |
| Wrap angle Embosser 1 (°) | 45 | 45 |
| Embosser 2 | rib | rib |
| Rubber hardness (Shore A) | 70 | 70 |
| Wrap angle Embosser 2 (°) | 85 | 85 |
| Softening/Pin interpenetration (mm) | 1.2 | 1.3 |
| Basis weight (g/m²) | 41.3 | 42.6 |
| Gurley (s) | 36 | 81.2 |
| MVTR (g/m²/day) | 3281 | 1291 |
| BET surface area (m²/g) | n.m. | 10.9 |
| Tensile Strength MD (N) | 78.4 | 88.2 |
| Tensile Strength XD (N) | 66.4 | 68.6 |
| Average tensile strength (N) | 72.4 | 78.4 |
| Trapezoidal tear resistance MD (N) | 28.5 | 29.0 |
| Trapezoidal tear resistance XD (N) | 21.0 | 26.7 |
| Average trapezoidal tear resistance | 24.8 | 27.8 |
| Average trapezoidal tear resistance normalized to basis weight (N*m²/g) | 0.59 | 0.66 |
| Average trapezoidal tear resistance normalized to product of BET surface area and basis weight (N) | n.m. | 0.060 |
| Handle-o-meter (gf) | 22.2 | 23.9 |
| Handle-o-meter (N) | 0.218 | 0.234 |
| Hydrostatic head (cmH₂O) | 138 | 150 |
| Total crystallinity index (%) | n.m. | 65.4 |
| Crystallinity index monoclinic (%) | n.m. | 1.3 |
| Crystallinity index orthorhombic (%) | n.m. | 64.1 |

### Examples 1 to 6

A flash-spun sheet was produced using the flash-spinning process described by US 3,227,794 and US 3,851,023 at different spin temperatures using a spin fluid of a polyethylene with a density >0.95 g/cm³ and a melt flow rate of 0.74 g/10min (ISO 1133 190°C/2.16 kg) at different polymer concentrations in a spin agent that was a mixture of dichloromethane and 2H,3H-decafluoropentane (herein also referred to as "D"). The flash-spun sheet was subsequently thermally bonded and embossed. For examples 1 to 4, one side was embossed by passing the sheet through a nip formed between a heated roll with a linen pattern and a rubber roll having a hardness of 70 Shore A and the opposite side was embossed through a nip formed between an embosser roll having a rib pattern and a rubber roll having a hardness of 70 Shore A. For example 5, one side was embossed by passing the sheet through a nip formed between a heated roll with a linen pattern and a rubber roll having a hardness of 60 Shore A and the opposite side was embossed through a nip formed between an embosser roll having a rib pattern and a rubber roll having a hardness of 70 Shore A. For example 6, one side was embossed by passing the sheet through a nip formed between a heated roll with a linen pattern and a rubber roll having a hardness of 50 Shore A and the opposite side was embossed through a nip formed between an embosser roll having a rib pattern and a rubber roll having a hardness of 70 Shore A. The fabrics were subsequently mechanically softened by passing them through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheets.

The spinning, bonding, and softening conditions and sheet properties are reported in Table 3, below.

**Table 3: Summary of the sheet preparation of Examples 1 to 6.**

| **Example** | **E1** | **E2** | **E3** | **E4** | **E5** | **E6** |
|---|---|---|---|---|---|---|
| Spin agent | D | D | D | D | D | D |
| Spin temperature (°C) | 205 | 210 | 201 | 205 | 210 | 210 |
| Polymer concentration (wt%) | 11 | 10.5 | 11.5 | 11.5 | 11 | 10.5 |
| Spin pressure (bar) | 100 | 103 | 96 | 103 | 104 | 103 |
| Pre-heat | No | No | No | No | No | No |
| Embosser 1 | linen | linen | linen | linen | linen | linen |
| Rubber hardness (Shore A) | 70 | 70 | 70 | 70 | 60 | 50 |
| Nip pressure (kPa) | 418 | 271 | 418 | 418 | 304 | 154 |
| Wrap angle Embosser 1 (°) | 25 | 25 | 25 | 45 | 45 | 45 |
| Embosser 2 | rib | rib | rib | rib | rib | rib |
| Rubber hardness (Shore A) | 70 | 70 | 70 | 70 | 70 | 70 |
| Wrap angle Embosser 2 (°) | 35 | 35 | 85 | 85 | 85 | 85 |
| Softening/Pin interpenetration (mm) | 1.0 | 1.0 | 1.3 | 1.3 | 1.2 | 1.2 |
| Basis weight (g/m²) | 34.4 | 35.6 | 41.3 | 41.6 | 41.3 | 41.6 |
| Gurley (s) | 6.2 | 6.5 | 12.8 | 6.8 | 4.2 | 4.6 |
| MVTR (g/m²/day) | 12673 | 10563 | 5093 | 9894 | 12401 | 10663 |
| BET surface area (m²/g) | 7.7 | 6.1 | 6.9 | 6.9 | 5.9 | 6.0 |
| Tensile Strength MD (N) | 45.1 | 48.3 | 78.6 | 70.9 | 56.5 | 63.6 |
| Tensile Strength XD (N) | 48.3 | 49.7 | 72.9 | 64.2 | 67.2 | 74.7 |
| Average tensile strength (N) | 42.6 | 49.0 | 75.7 | 67.6 | 61.9 | 69.2 |
| Trapezoidal tear resistance MD (N) | 23.6 | 24.1 | 26.6 | 28.5 | 25.5 | 31.3 |
| Trapezoidal tear resistance XD (N) | 20.5 | 18.9 | 25.8 | 24.7 | 24.7 | 24.3 |
| Average trapezoidal tear resistance | 22.0 | 21.5 | 26.2 | 25.1 | 25.1 | 27.8 |
| Average trapezoidal tear resistance normalized to basis weight (N*m²/g) | 0.64 | 0.60 | 0.63 | 0.60 | 0.61 | 0.67 |
| Average trapezoidal tear resistance normalized to product of BET surface area and basis weight (N) | 0.082 | 0.100 | 0.090 | 0.089 | 0.100 | 0.110 |
| Handle-o-meter (qf) | 13.5 | 14.8 | 18.8 | 17.9 | 16.1 | 15.7 |
| Handle-o-meter (N) | 0.132 | 0.146 | 0.180 | 0.175 | 0.157 | 0.154 |
| Hydrostatic head (cmH₂O) | 123 | 122 | 139 | 135 | 119 | 124 |
| Total crystallinity index (%) | 64.2 | 66.9 | 67.0 | 63.2 | 68.2 | n.m. |
| Crystallinity index monoclinic (%) | 1.8 | 1.3 | 1.4 | 1.3 | - | n.m. |
| Crystallinity index orthorhombic (%) | 62.4 | 65.6 | 65.6 | 61.9 | 68.2 | n.m. |

Examples 1 to 6 illustrate that a beneficial combination of properties can be obtained when using a chlorine-containing solvent as spin-agent compared to a hydrocarbon-based spin agent as used in Comparative examples 1 to 6. The comparative examples 1 to 6 using a hydrocarbon-based spin agent show that there is a correlation between trapezoidal tear resistance and BET surface area, but this trend is not seen in the examples using a chlorine-containing solvent as spin-agent, where a reduction in BET surface area of the bonded sheet does not result in a reduction of the tear properties. Moreover, the examples with low BET surface area using a chlorine-containing solvent as spin-agent have improved breathability properties (low Gurley Hill porosity).

### Examples 7 to 13

A flash-spun sheet was produced using the flash-spinning process described by US 3,227,794 and US 3,851,023 at a spin temperature of 210°C using a spin fluid of a polyethylene with a density >0.95 g/cm³ and a melt flow rate of 0.74 g/10min (ISO 1133 190°C/2.16 kg) at different polymer concentrations in a spin agent that was a mixture of dichloromethane and 2H,3H-decafluoropentane (herein also referred to as "D"). The flash-spun sheets of Examples 7 to 13 were subsequently thermally bonded and embossed. The flash-spun sheet of Example 13 was additionally first in alternating contact with two pre-heat rolls set at a temperature of 50°C before being thermally bonded and embossed. For examples 7 to 10 and 13, one side was embossed by passing the sheet through a nip formed between a heated roll with a linen pattern and a rubber roll having a hardness of 50 Shore A and the opposite side was embossed through a nip formed between an embosser roll having a rib pattern and a rubber roll having a hardness of 70 Shore A. For example 11, one side was embossed by passing the sheet through a nip formed between a heated roll with a linen pattern and a rubber roll having a hardness of 70 Shore A and the opposite side was embossed through a nip formed between an embosser roll having a rib pattern and a rubber roll having a hardness of 70 Shore A. For example 12, one side was embossed by passing the sheet through a nip formed between a heated roll with a linen pattern and a rubber roll having a hardness of 50 Shore A and the opposite side was embossed through a nip formed between an embosser roll having a rib pattern and a rubber roll having a hardness of 70 Shore A. The fabrics were subsequently mechanically softened with a blunt pin configuration. The thermally bonded sheets of examples 7, 9 to 11 and 13 were passed once and the thermally bonded sheets of examples 8 and 12 were passed twice through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheets.

The spinning, bonding, and softening conditions and sheet properties are reported in Table 4, below.

**Table 4: Summary of the sheet preparation of Examples 7 to 13.**

| **Example** | **E7** | **E8** | **E9** | **E10** | **E11** | **E12** | **E13** |
|---|---|---|---|---|---|---|---|
| Spin agent | D | D | D | D | D | D | D |
| Spin temperature (°C) | 210 | 210 | 210 | 210 | 210 | 210 | 210 |
| Polymer concentration (wt%) | 10.5 | 10.5 | 10 | 10 | 11 | 11 | 11 |
| Spin pressure (bar) | 104 | 107 | 109 | 109 | 110 | 110 | 109 |
| Pre-heat | No | No | No | No | No | No | Yes |
| Embosser 1 | linen | linen | linen | linen | linen | linen | linen |
| Rubber hardness (Shore A) | 50 | 50 | 50 | 50 | 70 | 50 | 50 |
| Nip pressure (kPa) | 187 | 187 | 234 | 234 | 418 | 187 | 187 |
| Wrap angle Embosser 1 (°) | 45 | 45 | 45 | 45 | 40 | 75 | 45 |
| Embosser 2 | rib | rib | rib | rib | rib | rib | rib |
| Rubber hardness (Shore A) | 70 | 70 | 70 | 70 | 70 | 70 | 70 |
| Wrap angle Embosser 2 (°) | 85 | 85 | 85 | 85 | 105 | 105 | 85 |
| Softening/Pin interpenetration (mm) | 1.2 | 1.0 x 1.0 | 1.2 | 1.2 | 1.4 | 1.4 x 1.4 | 1.2 |
| Basis weight (g/m²) | 46.9 | 46.4 | 46.7 | 46.1 | 57.3 | 52.7 | 45.05 |
| Gurley (s) | 3.7 | 6.8 | 5.5 | 4.7 | 21.9 | 5.2 | 2.8 |
| MVTR (g/m²/day) | 12941 | 8640 | 11096 | 10916 | 8223 | 9376 | 12972 |
| BET surface area (m²/g) | 5.9 | 6.7 | 5.2 | 5.3 | 6.2 | 7.3 | 5.7 |
| Tensile Strength MD (N) | 60.4 | 67.5 | 70.5 | 62.3 | 125.9 | 47.6 | 62.2 |
| Tensile Strength XD (N) | 70.6 | 71.7 | 87.9 | 78.5 | 117.7 | 48.7 | 72.8 |
| Average tensile strength (N) | 65.5 | 69.6 | 79.2 | 70.4 | 79.9 | 48.15 | 67.5 |
| Trapezoidal tear resistance MD (N) | 31.4 | 32.7 | 30.4 | 34.2 | 28.3 | 31.8 | 31.3 |
| Trapezoidal tear resistance XD (N) | 24.4 | 25.0 | 22.2 | 26.3 | 30.5 | 32.7 | 25.7 |
| Average trapezoidal tear resistance | 27.9 | 28.9 | 26.3 | 30.2 | 29.4 | 32.3 | 28.5 |
| Average trapezoidal tear resistance normalized to basis weight (N*m²/g) | 0.59 | 0.62 | 0.56 | 0.66 | 0.52 | 0.61 | 0.63 |
| Average trapezoidal tear resistance normalized to product of BET surface are and basis weight (N) | 0.100 | 0.091 | 0.107 | 0.120 | 0.084 | 0.083 | 0.110 |
| Handle-o-meter (gf) | 26.6 | 20.8 | 20.2 | 18.6 | 41.9 | 16.9 | 18.4 |
| Handle-o-meter (N) | 0.251 | 0.204 | 0.198 | 0.182 | 0.411 | 0.166 | 0.180 |
| Hydrostatic head (cmH₂O) | 119 | 126 | 130 | 118 | 182 | 132 | 127 |
| Total crystallinity index (%) | 64.8 | n.m. | 65.9 | 67.5 | 71.5 | n.m. | 64.4 |
| Crystallinity index monoclinic (%) | 1.5 | n.m. | 1.4 | 1.4 | - | n.m. | 1.4 |
| Crystallinity index orthorhombic (%) | 63.3 | n.m. | 66.1 | 66.1 | 71.5 | n.m. | 63.0 |

Examples 7 to 13 illustrate that a beneficial combination of properties can be obtained for a variety of different preparation conditions when using a chlorine-containing solvent as spin-agent compared to a hydrocarbon-based spin agent as used in Comparative examples 1 to 6, in particular a lower BET surface area. Additionally, it has surprisingly been observed that the sheets of the Examples combine good flux properties as reflected by a low Gurley Hill porosity and a good MVTR while maintaining a high trapezoidal tear resistance. Additionally, comparing Example 3 to 6 with 7 to 10, it is observed that a reduction of the compression force in the linen embosser results in an improved breathability of the fabric. The improved breathability is reflected by a notable reduction in the Gurley Hill porosity and an improvement of the moisture vapor transmission rate.

### Examples 14 to 17

A flash-spun sheet was produced using the flash-spinning process described by US 3,227,794 and US 3,851,023 at a spin temperature of 210°C using a spin fluid of a polyethylene with a density >0.95 g/cm³ and a melt flow rate of 0.74 g/10min (ISO 1133 190°C/2.16 kg) at different polymer concentrations in a spin agent that was a mixture of dichloromethane and 2H,3H-decafluoropentane (herein also referred to as "D"). For all examples, one side was embossed by passing the sheet through a nip formed between a heated roll with a linen pattern and a rubber roll having a hardness of 70 Shore A and the opposite side was embossed through a nip formed between an embosser roll having a rib pattern and a rubber roll having a hardness of 70 Shore A. The fabrics were not mechanically softened.

The spinning, bonding, and softening conditions and sheet properties are reported in Table 5, below.

**Table 5: Summary of the sheet preparation of Examples 14 to 17.**

| **Example** | **E14** | **E15** | **E16** | **E17** |
|---|---|---|---|---|
| Spin agent | D | D | D | D |
| Spin temperature (°C) | 210 | 210 | 210 | 210 |
| Polymer concentration (wt%) | 11 | 11 | 10 | 10 |
| Spin pressure (bar) | 106 | 106 | 109 | 109 |
| Pre-heat | No | No | No | No |
| Embosser 1 | linen | linen | linen | linen |
| Rubber hardness (Shore A) | 70 | 70 | 70 | 70 |
| Nip pressure (kPa) | 747 | 418 | 418 | 747 |
| Wrap angle embosser 1 (°) | 45 | 45 | 45 | 45 |
| Embosser 2 | rib | rib | rib | Rib |
| Rubber hardness (Shore A) | 70 | 70 | 70 | 70 |
| Wrap angle embosser 2 (°) | 85 | 85 | 85 | 85 |
| Softening/Pin interpenetration (mm) | none | none | none | none |
| Basis weight (g/m²) | 46.4 | 46.8 | 43.8 | 43.7 |
| Gurley (s) | 28.8 | 15.5 | 7.3 | 16.8 |
| MVTR (g/m²/day) | 5822 | 7969 | 10637 | 8455 |
| BET surface area (m²/g) | 5.7 | 6.6 | 4.7 | 5.2 |
| Tensile Strength MD (N) | 77.7 | 66.4 | 63.3 | 72.0 |
| Tensile Strength XD (N) | 81.0 | 74.0 | 74.7 | 81.6 |
| Average tensile strength (N) | 79.4 | 70.2 | 69.0 | 76.8 |
| Trapezoidal tear resistance MD (N) | 32.6 | 32.3 | 33.9 | 27.0 |
| Trapezoidal tear resistance XD (N) | 27.0 | 27.1 | 23.0 | 24.1 |
| Average trapezoidal tear resistance | 29.8 | 29.7 | 28.4 | 25.6 |
| Average trapezoidal tear resistance normalized to basis weight (N*m²/g) | 0.64 | 0.63 | 0.65 | 0.59 |
| Average trapezoidal tear resistance normalized to product of BET surface are and basis weight (N) | 0.112 | 0.0965 | 0.138 | 0.111 |
| Handle-o-meter (qf) | 40.9 | 38.7 | 24.5 | 31.4 |
| Handle-o-meter (N) | 0.401 | 0.380 | 0.240 | 0.308 |
| Hydrostatic head (cmH₂O) | 159 | 138 | 131 | 146 |
| Total crystallinity index (%) | n.m. | n.m. | 67.3 | 68.0 |
| Crystallinity index monoclinic (%) | n.m. | n.m. | 1.2 | 0.8 |
| Crystallinity index orthorhombic (%) | n.m. | n.m. | 66.1 | 67.2 |

Examples 14 to 17, performed without a mechanical softening step, illustrate that a beneficial combination of properties can be obtained when using a chlorine-containing solvent as spin-agent compared to a hydrocarbon-based spin agent as used in Comparative examples 1 to 6. Additionally, comparing Example E14 and E15, and E16 and E17, shows that a reduced compression force in the nip of the linen embosser has a notable improvement of the breathability of the fabric, seen by a reduction in the Gurley Hill porosity, and an increase in the moisture vapor transmission rate.

### Comparative examples 9 and 10

A flash-spun sheet was produced using the flash-spinning process described by US 3,227,794 and US 3,851,023 at a spin temperature of 200°C using a spin fluid of 16 wt% polyethylene with a density >0.95 g/cm³ and a melt flow rate of 0.74 g/10min (ASTM 1238 190°C/2.16 kg) in a spin agent at a spin temperature of 190°C using a spin fluid of 17 wt% polymer in a hydrocarbon-based spin agent that was a mixture of n-pentane and cyclopentane (herein also referred to as "H").

The flash-spun sheets of both Comparative examples were subsequently thermally bonded using a process as described in US 2003/0165667. The consolidated sheet was first in alternating contact with two pre-heat rolls set at a temperature of 65°C before being embossed on both sides with rib patterns. The thermally bonded sheet of comparative example 9 and 10 was subsequently transferred through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheets.

The spinning, bonding, and softening conditions and sheet properties are reported in Table 6, below.

**Table 6: Summary of the sheet preparation of Comparative Examples 9 and 10.**

| **Example** | **CE9** | **CE10** |
|---|---|---|
| Spin agent | H | H |
| Spin temperature (°C) | 200 | 200 |
| Polymer concentration (wt%) | 16 | 15 |
| Spin pressure (bar) | 104 | 105 |
| Pre-heat | Yes | Yes |
| Embosser 1 | rib | rib |
| Rubber hardness (Shore A) | 60 | 60 |
| Wrap angle embosser 1 (°) | 85 | 85 |
| Embosser 2 | Rib | Rib |
| Rubber hardness (Shore A) | 70 | 70 |
| Wrap angle embosser 2 (°) | 85 | 85 |
| Softening/Pin interpenetration (mm) | 1.2 | 1.2 |
| Basis weight (g/m²) | 43.5 | 45.3 |
| Gurley (s) | 4.35 | 4.73 |
| MVTR (g/m²/day) | n.m. | 10750 |
| BET surface area (m²/g) | 9.7 | 9.8 |
| Tensile Strength MD (N) | 71.6 | 73.5 |
| Tensile Strength XD (N) | 57.6 | 59.9 |
| Average tensile strength (N) | 64.6 | 66.7 |
| Trapezoidal tear resistance MD (N) | 26.5 | 31.2 |
| Trapezoidal tear resistance XD (N) | 21.8 | 22.0 |
| Average trapezoidal tear resistance | 24.2 | 26.6 |
| Average trapezoidal tear resistance normalized to basis weight (N*m²/g) | 0.58 | 0.57 |
| Average trapezoidal tear resistance normalized to product of BET surface are and basis weight (N) | 0.056 | 0.059 |
| Handle-o-meter (qf) | 17.4 | 18.4 |
| Handle-o-meter (N) | 0.171 | 0.180 |
| Hydrostatic head (cmH₂O) | 120 | 121 |
| Total crystallinity index (%) | 68.5 | 67.7 |
| Crystallinity index monoclinic (%) | 1.0 | 1.2 |
| Crystallinity index orthorhombic (%) | 67.5 | 66.5 |

### Examples 18 to 20

A flash-spun sheet was produced using the flash-spinning process described by US 3,227,794 and US 3,851,023 at different spin temperatures using a spin fluid of a polyethylene with a density >0.95 g/cm³ and a melt flow rate of 0.74 g/10min (ISO 1133 190°C/2.16 kg) at different polymer concentrations in a spin agent that was a mixture of dichloromethane and 2H,3H-decafluoropentane (herein also referred to as "D"). The flash-spun sheet was subsequently first in alternating contact with two pre-heat rolls set at a temperature of 60 to 65°C before being thermally bonded and embossed using the process as described in US 2003/0165667 A1. For Examples 18 to 20 the temperature of the pre-heat rolls was set to 60°C. Examples 18 to 20 were subsequently softened by passing through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheets.

The spinning, bonding, and softening conditions and sheet properties are reported in Table 7, below.

**Table 7: Summary of the sheet preparation of Examples 18 to 20.**

| **Example** | **E18** | **E19** | **E20** |
|---|---|---|---|
| Spin agent | D | D | D |
| Spin temperature (°C) | 210 | 210 | 210 |
| Polymer concentration (wt%) | 10.5 | 10.5 | 10.5 |
| Spin pressure (bar) | 103 | 103 | 103 |
| Pre-heat | Yes | Yes | Yes |
| Embosser 1 | rib | rib | rib |
| Rubber hardness (Shore A) | 60 | 60 | 60 |
| Wrap angle embosser 1 (°) | 85 | 85 | 85 |
| Embosser 2 | rib | rib | rib |
| Rubber hardness (Shore A) | 70 | 70 | 70 |
| Wrap angle embosser 2 (°) | 85 | 85 | 85 |
| Softening/Pin interpenetration (mm) | 1.2 | 1.2 | 1.2 |
| Basis weight (g/m²) | 41.5 | 47.8 | 45.7 |
| Gurley (s) | 4.4 | 5.9 | 4.3 |
| MVTR (g/m²/day) | 12227 | 9694 | 9937 |
| BET surface area (m²/g) | 5.7 | 6.3 | 6.9 |
| Tensile Strength MD (N) | 83.1 | 73.9 | 63.9 |
| Tensile Strength XD (N) | 79 | 80.8 | 71.9 |
| Average tensile strength (N) | 81.1 | 77.4 | 67.9 |
| Trapezoidal tear resistance MD (N) | 30.6 | 36.5 | 36.7 |
| Trapezoidal tear resistance XD (N) | 27.8 | 31.2 | 30.4 |
| Average trapezoidal tear resistance | 29.2 | 33.9 | 33.6 |
| Average trapezoidal tear resistance normalized to basis weight (N*m²/g) | 0.70 | 0.71 | 0.74 |
| Average trapezoidal tear resistance normalized to product of BET surface are and basis weight (N) | 0.123 | 0.113 | 0.107 |
| Handle-o-meter (gf) | 16.8 | 19.7 | 17.1 |
| Handle-o-meter (N) | 0.164 | 0.192 | 0.168 |
| Hydrostatic head (cmH₂O) | 130 | 138 | 128 |
| Total crystallinity index (%) | 65.6 | 63 | 62.4 |
| Crystallinity monoclinic (%) | 1.3 | 1.1 | 1.5 |
| Crystallinity orthorhombic (%) | 64.3 | 61.9 | 60.8 |

The above Tables show that sheets prepared by using a hydrocarbon-based mixture as spin agent have a lower average trapezoidal tear strength (normalized to the product of BET surface area and basis weight) compared to sheets prepared by using a spin agent comprising a chlorine-containing solvent.

Examples 18 to 20 illustrate that a beneficial combination of properties can be obtained when using a chlorine-containing solvent as spin-agent compared to a hydrocarbon-based spin agent as used in Comparative examples 9 and 10, in particular a lower BET surface area. Additionally, it has surprisingly been observed that the sheets of the Examples combine good flux properties as reflected by a low Gurley Hill porosity and good MVTR while maintaining a high trapezoidal tear resistance. Additionally, when comparing E13 with E18 to E20, it has been observed that the rib x rib configuration gives an improved balance of physical properties compared to a linen x rib embossing pattern, in particular a higher tear resistance and tensile strength compared to the linen x rib embossed samples. This differs from US 2003/0165667 where the use of a rib x rib embossed fabric results in a reduction of tear resistance.

## Claims

1. A thermally bonded sheet of nonwoven flash-spun plexifilamentary fibrils, the sheet having
(a) a basis weight from 32 g/m² to 60 g/m²,
(b) an average trapezoidal tear resistance above 20 N, measured according to the method described herein,
(c) an average tensile strength from 40 N to 90 N, measured according to the method described herein,
(d) a BET surface area from 4 m²/g to 8 m²/g, measured according to the method described herein,
(e) a Gurley Hill porosity of 2 seconds to 30 seconds, measured according to the method described herein, and
(f) a hydrostatic head above 105 cmH₂O, measured according to the method described herein.

2. The sheet of claim 1 having a total crystallinity index of less than 72 %, measured according to the method described herein.

3. The sheet of any one of claims 1 to 2 having a handle-o-meter stiffness from 0.05 N to 0.50 N.

4. The sheet of any one of claims 1 to 3 having a Moisture Vapor Transmission Rate of 5500 g/m²/day or more, measured according to the method described herein, or having an average trapezoidal tear strength, normalized to basis weight, of 0.5 N/g/m² to 0.8 N/g/m², or having an average trapezoidal tear strength, normalized to the product of BET surface area and basis weight, of 0.082 N to 0.125 N.

5. The sheet of any one of claims 1 to 4, wherein the flash-spun plexifilamentary fibrils are comprised of a polyolefin, selected from the group of polyethylene (PE), polypropylene (PP), and blends and mixtures thereof, or wherein the flash-spun plexifilamentary fibrils are comprised of a polyolefin which is a high-density polyethylene (HDPE), a blend of a high-density polyethylene (HDPE) with a linear low-density polyethylene (LLDPE), or a blend of a high-density polyethylene (HDPE) with a low-density polyethylene (LDPE).

6. A process for the preparation of a sheet of nonwoven flash-spun plexifilamentary fibrils which comprises the steps of:
(i) generating a spin fluid comprising
(a) from 8 to 12 weight percent of a polymer, based on the total amount of the spin fluid, and
(b) a spin agent comprising a chlorine-containing solvent, selected from dichloromethane, cis-1,2-dichloroethylene and trans-1,2-dichloroethylene, in combination with a fluorine-containing solvent,
(ii) flash-spinning the spin fluid at a temperature at or above 200°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and
(iv) thermally bonding by embossing the consolidated sheet to obtain a bonded sheet.

7. The process of claim 6, wherein the spin fluid comprises from 9 to 11.5 weight percent of a polymer, based on the total amount of the spin fluid, and wherein flash-spinning of the spin fluid is carried out at a temperature at or above 205°C.

8. The process of claim 6 or 7, wherein the process further comprises mechanically softening the bonded sheet.

9. The process of any one of claims 6 to 8, wherein the sheet is embossed by passing through a nip of two rolls of an embosser, one being an embossing roll and the other a rubber coated back-up roll with a Shore A hardness of 50 to 70, and wherein the static pressure in the nip of the embosser is between 150 kPa and 750 kPa, or wherein 12 % to 85 % of the area of at least one surface of the sheet is bonded.

10. The process of any one of claims 6 to 9, wherein the polymer is a polyolefin, selected from the group of polyethylene (PE), polypropylene (PP), and blends and mixtures thereof, or wherein the flash-spun plexifilamentary fibrils are comprised of a polyolefin which is a high-density polyethylene (HDPE), a blend of a high-density polyethylene (HDPE) with a linear low-density polyethylene (LLDPE), or a blend of a high-density polyethylene (HDPE) with a low-density polyethylene (LDPE), and/or wherein the spin agent consists essentially of dichloromethane in combination with perfluoropentane, perfluorohexane, 1,1,1,3,3-pentafluorobutane, 1H,4H-perfluorobutane, 2H,3H-decafluoropentane, 1H,6H-perfluorohexane, or 1H-perfluorohexane.

11. The process of any one of claims 6 to 10, wherein the obtained sheet has
(a) a basis weight from 32 g/m² to 60 g/m²,
(b) an average trapezoidal tear above 20 N, measured according to the method described herein,
(c) an average tensile strength from 40 N to 90 N, measured according to the method described herein,
(d) a BET surface area from 4 m²/g to 8 m²/g, measured according to the method described herein,
(e) a Gurley Hill porosity of 2 seconds to 30 seconds, measured according to the method described herein, and
(f) a hydrostatic head above 105 cmH₂O, measured according to the method described herein.

12. A multilayer structure comprising at least one sheet according to any one of claims 1 to 5 and at least one further sheet or film.

13. Use of the sheet of any one of claims 1 to 5 for preparing a multilayer structure.

14. Use of a sheet of any one of claims 1 to 5 or of the multilayer structure of claim 12 for the production of garments or medical wraps.

15. An article comprising a sheet of any one of claims 1 to 5 or a multilayer structure of claim 12, preferably wherein the article is selected from garments, protective apparel, gowns, or medical wraps.

## Patentansprüche

1. Thermisch gebundene Folie aus nichtgewebten, flash-gesponnenen plexifilamentären Fibrillen, wobei die Folie Folgendes aufweist
(a) ein Flächengewicht von 32 g/m² bis 60 g/m²,
(b) eine durchschnittliche Trapezreißfestigkeit von über 20 N, gemessen nach dem hierin beschriebenen Verfahren,
(c) eine durchschnittliche Zugfestigkeit von 40 N bis 90 N, gemessen nach dem hierin beschriebenen Verfahren,
(d) eine BET-Oberfläche von 4 m²/g bis 8 m²/g, gemessen nach dem hierin beschriebenen Verfahren,
(e) eine Gurley-Hill-Porosität von 2 Sekunden bis 30 Sekunden, gemessen nach dem hierin beschriebenen Verfahren, und
(f) eine hydrostatische Druckhöhe von über 105 cmH₂O, gemessen nach dem hierin beschriebenen Verfahren.

2. Folie nach Anspruch 1, die einen Gesamtkristallinitätsindex von weniger als 72 % aufweist, gemessen nach dem hierin beschriebenen Verfahren.

3. Folie nach einem der Ansprüche 1 bis 2, die eine Handle-o-Meter-Steifigkeit von 0,05 N bis 0,50 N aufweist.

4. Folien nach einem der Ansprüche 1 bis 3, die eine Wasserdampfübertragungsgeschwindigkeit von 5500 g/m²/Tag oder mehr aufweist, gemessen nach dem hier beschriebenen Verfahren, oder eine durchschnittliche Trapezreißfestigkeit, normiert auf das Flächengewicht, von 0,5 N/g/m² bis 0,8 N/g/m² aufweist, oder eine durchschnittliche Trapezreißfestigkeit, normiert auf das Produkt aus BET-Oberfläche und Flächengewicht, von 0,082 N bis 0,125 N aufweist.

5. Folie nach einem der Ansprüche 1 bis 4, wobei die flash-gesponnenen plexifilamentären Fibrillen ein Polyolefin umfassen, ausgewählt aus der Gruppe von Polyethylen (PE), Polypropylen (PP) und Mischungen und Gemischen davon, oder wobei die flash-gesponnenen plexifilamentären Fibrillen ein Polyolefin umfassen, das ein Polyethylen hoher Dichte (HDPE), eine Mischung aus einem Polyethylen hoher Dichte (HDPE) mit einem linearen Polyethylen niedriger Dichte (LLDPE) oder eine Mischung aus einem Polyethylen hoher Dichte (HDPE) mit einem Polyethylen niedriger Dichte (LDPE) ist.

6. Prozess zur Herstellung einer Folie aus nichtgewebten, flash-gesponnenen plexifilamentären Fibrillen, der die Schritte umfasst von:
(i) Erzeugen eines Spinnfluids, umfassend
(a) von 8 bis 12 Gewichtsprozent eines Polymers, bezogen auf die Gesamtmenge des Spinnfluids, und
(b) ein Spinnmittel, umfassend ein chlorhaltiges Lösungsmittel, ausgewählt aus Dichlormethan, cis-1,2-Dichlorethylen und trans-1,2-Dichlorethylen, in Kombination mit einem fluorhaltigen Lösungsmittel,
(ii) Flash-Spinnen des Spinnfluids bei einer Temperatur bei oder über 200 °C und bei einem Druck, der über dem Dampfdruck des Spinnfluids liegt, in eine Region mit im Wesentlichen atmosphärischem Druck, um plexifilamentäre Fibrillen des Polymers zu bilden,
(iii) Sammeln der plexifilamentären Fibrillen des Polymers auf einem Sammelmittel als eine Folie aus nichtgewebten, flash-gesponnenen plexifilamentären Fibrillen und Anwenden von Druck auf die Folie, um eine konsolidierte Folie zu erhalten, und
(iv) thermisches Verbinden durch Prägen der konsolidierten Folie, um eine gebundene Folie zu erhalten.

7. Prozess nach Anspruch 6, wobei das Spinnfluid von 9 bis 11,5 Gewichtsprozent eines Polymers, bezogen auf die Gesamtmenge des Spinnfluids, umfasst, und wobei das Flash-Spinnen des Spinnfluids bei einer Temperatur bei oder über 205°C durchgeführt wird.

8. Prozess nach einem der Ansprüche 6 bis 7, wobei der Prozess weiter ein mechanisches Erweichen der gebundenen Folie umfasst.

9. Prozess nach einem der Ansprüche 6 bis 8, wobei die Folie durch Führen durch einen Walzenspalt zwischen zwei Walzen einer Prägemaschine geprägt wird, wobei es sich bei der einen Walze um eine Prägewalze und bei der anderen um eine gummibeschichtete Gegenwalze mit einer Shore-A-Härte von 50 bis 70 handelt, und wobei der statische Druck im Walzenspalt der Prägemaschine zwischen 150 kPa und 750 kPa liegt, oder wobei 12 % bis 85 % der Fläche mindestens einer Oberfläche der Folie verbunden ist.

10. Prozess nach einem der Ansprüche 6 bis 9, wobei das Polymer ein Polyolefin ist, das ausgewählt ist aus der Gruppe von Polyethylen (PE), Polypropylen (PP) und Mischungen und Gemischen davon, oder wobei die flash-gesponnenen plexifilamentären Fibrillen ein Polyolefin umfassen, das ein Polyethylen hoher Dichte (HDPE), eine Mischung aus einem Polyethylen hoher Dichte (HDPE) mit einem linearen Polyethylen niedriger Dichte (LLDPE) oder eine Mischung aus einem Polyethylen hoher Dichte (HDPE) mit einem Polyethylen niedriger Dichte (LDPE) ist, und/oder wobei das Spinnmittel im Wesentlichen aus Dichlormethan in Kombination mit Perfluorpentan, Perfluorhexan, 1,1,1,3,3-Pentafluorbutan, 1H,4H-Perfluorbutan, 2H,3H-Decafluorpentan, 1H,6H-Perfluorhexan oder 1H-Perfluorhexan besteht.

11. Prozess nach einem der Ansprüche 6 bis 10, wobei die erhaltene Folie Folgendes aufweist
(a) ein Flächengewicht von 32 g/m² bis 60 g/m²,
(b) eine durchschnittliche Trapezreißfestigkeit von über 20 N, gemessen nach dem hierin beschriebenen Verfahren,
(c) eine durchschnittliche Zugfestigkeit von 40 N bis 90 N, gemessen nach dem hierin beschriebenen Verfahren,
(d) eine BET-Oberfläche von 4 m²/g bis 8 m²/g, gemessen nach dem hierin beschriebenen Verfahren,
(e) eine Gurley-Hill-Porosität von 2 Sekunden bis 30 Sekunden, gemessen nach dem hierin beschriebenen Verfahren, und
(f) eine hydrostatische Druckhöhe von über 105 cmH₂O, gemessen nach dem hierin beschriebenen Verfahren,

12. Mehrschichtige Struktur, umfassend mindestens eine Folie nach einem der Ansprüche 1 bis 5 und mindestens eine weitere Folie oder einen Film.

13. Verwendung der Folie nach einem der Ansprüche 1 bis 5 zum Herstellen einer mehrschichtigen Struktur.

14. Verwendung einer Folie nach einem der Ansprüche 1 bis 5 oder der mehrschichtigen Struktur nach Anspruch 12 zur Produktion von Kleidungsstücken oder medizinischen Bandagen.

15. Gegenstand, umfassend eine Folie nach einem der Ansprüche 1 bis 5 oder eine mehrschichtige Struktur nach Anspruch 12, wobei der Gegenstand vorzugsweise aus Kleidungsstücken, Schutzkleidung, Kittel oder medizinischen Bandagen ausgewählt ist.

## Revendications

1. Feuille thermoliée de fibrilles plexifilamentaires filées éclair non tissées, la feuille présentant
(a) un poids de base de 32 g/m² à 60 g/m²,
(b) une résistance moyenne à la déchirure trapézoïdale supérieure à 20 N, mesurée selon la procédé décrite ici,
(c) une résistance moyenne à la traction de 40 N à 90 N, mesurée selon la procédé décrite ici,
(d) une surface spécifique BET de 4 m²/g à 8 m²/g, mesurée selon la procédé décrite ici,
(e) une porosité de Gurley Hill de 2 secondes à 30 secondes, mesurée selon la procédé décrite ici, et
(f) une charge hydrostatique supérieure à 105 cmH₂O, mesurée selon la procédé décrite ici,

2. Feuille selon la revendication 1, présentant un indice de cristallinité totale inférieur à 72 %, mesuré selon la procédé décrite ici.

3. Feuille selon l'une quelconque des revendications 1 à 2, présentant une rigidité handle-o-meter de 0,05 N à 0,50 N.

4. Feuille selon l'une quelconque des revendications 1 à 3 présentant un taux de transmission de vapeur d'eau de 5500 g/m²/jour ou plus, mesuré selon la procédé décrite ici, ou présentant une résistance moyenne à la déchirure trapézoïdale, normalisée au poids de base, de 0,5 N/g/m² à 0,8 N/g/m², ou présentant une résistance moyenne à la déchirure trapézoïdale, normalisée au produit de la surface spécifique BET et du poids de base, de 0,082 N à 0,125 N.

5. Feuille selon l'une quelconque des revendications 1 à 4, dans laquelle les fibrilles plexifilamentaires filées éclair sont composées d'une polyoléfine, choisie dans le groupe consistant en polyéthylène (PE), polypropylène (PP) et combinaisons mélanges et mélanges de ceux-ci, ou dans laquelle les fibrilles plexifilamentaires filées éclair sont composées d'une polyoléfine qui est un polyéthylène haute densité, un mélange de polyéthylène haute densité (HDPE) et de polyéthylène basse densité linéaire (LLDPE), ou un mélange de polyéthylène haute densité (HDPE) et de polyéthylène basse densité (LDPE).

6. Processus de préparation d'une feuille de fibrilles plexifilamentaires filées éclair non tissées qui comprend les étapes de :
(i) la génération d'un fluide de filage comprenant
(a) de 8 à 12 pour cent en poids d'un polymère, sur la base de la quantité totale du fluide de filage, et
(b) un agent de filage comprenant un solvant contenant du chlore, choisi parmi le dichlorométhane, le cis-1,2-dichloroéthylène et le trans-1,2-dichloroéthylène, en combinaison avec un solvant contenant du fluor,
(ii) le filage éclair du fluide de filage à une température supérieure ou égale à 200 °C et à une pression qui est supérieure à la pression de vapeur du fluide de filage dans une région de pression sensiblement atmosphérique pour former des fibrilles plexifilamentaires du polymère,
(iii) la collecte des fibrilles plexifilamentaires du polymère sur un moyen de collecte sous forme de feuille de fibrilles plexifilamentaires filées éclair non tissées et l'application d'une pression sur la feuille pour obtenir une feuille consolidée, et
(iv) la liaison thermique par gaufrage de la feuille consolidée pour obtenir une feuille liée.

7. Processus selon la revendication 6, dans lequel le fluide de filage comprend de 9 à 11,5 pour cent en poids d'un polymère, sur la base de la quantité totale du fluide de filage, et dans lequel le filage éclair du fluide de filage est effectué à une température supérieure ou égale à 205 °C.

8. Processus selon la revendication 6 ou 7, dans lequel le processus comprend en outre le ramollissement mécanique de la feuille liée.

9. Processus selon l'une quelconque des revendications 6 à 8, dans lequel la feuille est gaufrée par passage à travers une ligne de contact de deux rouleaux d'une machine à gaufrer, l'un étant un rouleau de gaufrage et l'autre un rouleau de support revêtu de caoutchouc d'une dureté Shore A de 50 à 70, et dans lequel la pression statique dans la ligne de contact de la machine à gaufrer est comprise entre 150 kPa et 750 kPa, ou dans lequel de 12 % à 85 % de l'aire d'au moins une surface de la feuille est liée.

10. Processus selon l'une quelconque des revendications 6 à 9, dans lequel le polymère est une polyoléfine, choisie dans le groupe consistant en polyéthylène (PE), polypropylène (PP) et combinaisons mélanges et mélanges de ceux-ci, ou dans lequel les fibrilles plexifilamentaires filées éclair sont composées d'une polyoléfine qui est un polyéthylène haute densité (HDPE), un mélange de polyéthylène haute densité (HDPE) et de polyéthylène basse densité linéaire (LLDPE), ou un mélange de polyéthylène haute densité (HDPE) et de polyéthylène basse densité (LDPE), et/ou dans lequel l'agent de filage se compose sensiblement de dichlorométhane en combinaison avec du perfluoropentane, perfluorohexane, 1,1,1,3,3-pentafluorobutane, 1H,4H-perfluorobutane, 2H,3H-décafluoropentane, 1H,6H-perfluorohexane, ou 1H-perfluorohexane.

11. Processus selon l'une quelconque des revendications 6 à 10, dans lequel la feuille obtenue présente
(a) un poids de base de 32 g/m² à 60 g/m²,
(b) une résistance moyenne à la déchirure trapézoïdale supérieure à 20 N, mesurée selon la procédé décrite ici,
(c) une résistance moyenne à la traction de 40 N à 90 N, mesurée selon la procédé décrite ici,
(d) une surface spécifique BET de 4 m²/g à 8 m²/g, mesurée selon la procédé décrite ici,
(e) une porosité de Gurley Hill de 2 secondes à 30 secondes, mesurée selon la procédé décrite ici, et
(f) une charge hydrostatique supérieure à 105 cmH₂O, mesurée selon la procédé décrite ici,

12. Structure multicouche comprenant au moins une feuille selon l'une quelconque des revendications 1 à 5 et au moins une autre feuille ou un autre film.

13. Utilisation de la feuille selon l'une quelconque des revendications 1 à 5 pour la préparation d'une structure multicouche.

14. Utilisation d'une feuille selon l'une quelconque des revendications 1 à 5 ou de la structure multicouche selon la revendication 12 pour la production de vêtements ou d'emballages médicaux.

15. Article comprenant une feuille selon l'une quelconque des revendications 1 à 5 ou une structure multicouche selon la revendication 12, de préférence dans lequel l'article est choisi parmi des vêtements, des habillements de protection, des blouses ou des emballages médicaux.
